# EUROPEAN PATENT APPLICATION

(11) **EP 4 767 832 A1**
(43) Date of publication of application: **01.07.2026**
(21) Application number: 24223694.1
(22) Date of filing: 30.12.2024
(51) Int. Cl.: A23J 3/22, A23L 27/26

(54) **METHOD FOR FLAVOURING A MEAT SUBSTITUTE**

(71) Applicant: Paleo B.V., 3290 Diest (BE)
(72) Inventor: SANCTORUM, Hermes, 3000 Leuven (BE); DONCK, Pierre, 3080 Tervuren (BE); LAUWERS, Elsa, 1330 Rixensart (BE); TREUMANN, Achim, 3001 Heverlee/Leuven (BE); PAZ, Isabel, 2000 Antwerpen (BE)
(74) Representative: Ipsilon Belgium

(57) **Abstract**

Described herein a method for flavouring a meat substitute. The invention in particular relates to a method wherein the steps comprises adding an myoglobin composition and a fat composition.

## Description

### Field

This invention relates to a method for flavouring a meat substitute. The invention in particular relates to a method wherein the steps comprises adding an myoglobin composition and a fat composition, further defined herein.

### Background

The World Health Organisation projected that global per capita meat consumption will rise over the years, necessitating a production increase of approximately 50-72% in the meat sector to satisfy the caloric and nutritional demands resulting from population expansion. Animal meat products impose ecological problems, demand substantial resources, and create ethical difficulties (Li, Xuejie, and Jian Li. "The flavour of plant-based meat analogues." Cereal Foods World 65.4 (2020): 0040).

Meat is a nutrient-dense, health-enhancing diet and a good source of minerals, heme containing iron, and vital amino acids. Furthermore, for many years, individuals have appreciated the flavour of meat. However, animal-based food production has exerted significant pressure on the environment, its natural resources, and animal populations. Although meat substitute products, such as plant-based food products, are more sustainable, their flavour has yet to meet expectations. The flavour of meat analogues is therefore important for consumer acceptance.

Hence, there is an ongoing need in the art for meat substitute products that mimic certain aspects, such as appearance, texture (or mouthfeel), and preferably flavour of meat, while being healthy, ethical, environmentally friendly and/or cost-effective.

### Description

### Meat substitute

A meat substitute is per definition not meat, not natural meat, not genuine meat. A meat substitute may be considered as a non-naturally occurring food or edible product. It means that within the context of this invention, a meat substitute is at least partly not meat from or derived from for instance, but not limited to, bovine or cattle, ovine, porcine, caprine, equines, poultry or fish. The meat substitute is at least partly not animal cell-based, and/or at least partly does not comprise cultured meat, meaning the meat substitute is at least partly meatless. The meat substitute is at least partly plant-derived or plant-based. Such plant-based meat may comprise plant proteins such as, but not limited to, soy, pea, and/or wheat gluten. As defined herein, a meat alternative or meat substitute may also be called plant-based meat, meat analogue, mock meat, or alternative protein. A meat substitute is synonymous of a meat replica or a meat analogue product or a meat-like product. It is thus understood that cell-based meats, cultured meats and plant-based meats may be considered meat substitutes. Cell-based meat is normally cultivated directly from animal stem cells. Cultured meat is normally produced by in vitro cell cultures of animal cells, as a form of cellular agriculture. Plant-based meat is normally produced using plant and other non-animal products. It is viable that, although not preferred in this invention, the meat substitute comprise a combination of partly plant-based and partly animal cells.

Preferably, the meat substitute does not comprise animal cells, animal tissues, or both. Preferably, the meat substitute is substantially plant-derived or plant-based. Preferably, the meat substitute is animal free. Preferably, the meat substitute comprises a single cell protein. As described herein, the term single cell protein refers to a protein derived from single-celled microorganisms such as algae, fungi, yeast, and/or bacteria. As described herein, any protein from microbial sources may be in the form of biomass and/or extracted protein.

Preferably, the meat substitute comprises a protein alternative to animal protein, such as, but not limited to, fermentation-derived protein (e.g. precision and/or biomass fermentations), and/or algae family-sourced protein and protein derived therefrom.

Preferably, the meat substitute comprises a protein derived from fungi. In particular, the protein thereof is derived from a filamentous fungus, such as *Fusarium venenatum.* A non-limitative example of the protein thereof is a mycoprotein. Other examples of a protein derived fungi is Typically, Filamentous fungi are increasingly significant in protein production due to the modification of strains to generate numerous secreted proteins or specific target proteins, such as hydrophobic proteins or antimicrobial peptides, in specialised fungal hosts. Any protein derived from such fungi that are suitable may be envisaged in the meat substitute of this invention.

The meat substitute typically is safe and/or ethical to be consumed by humans, including vegetarians, vegans, and people with religious and/or cultural dietary laws. Plant-based meat substitutes generally contains fewer calories and less saturated fat than animal-based meat substitutes. Plant-based meat substitutes have substantially zero cholesterol and substantially contains fiber. The (plant-based) meat substitute according to this invention typically meet the demand of sustainable diet, suitable for consumers seeking to contribute to at least lessen the environment impact. Furthermore, the meat substitute according to the invention typically is cost-effective for producers or manufacturers, and/or suitable for a pilot or large or plant or industrial scale production.

A meat substitute may have the same aspect (such as pattern, lettering), form, structure, composition (such as similar fat and protein content), texture, color, flavour, aroma and/or appearance as meat. Alternatively, it might have an aspect, form, structure, texture, color, flavour, aroma and/or appearance which is distinct from the one of meat. A meat substitute may be formulated as a liquid, solid, or semi-solid food product. An example of the meat substitute product includes, but not limited to, a patty.

For instance, the meat substitute could be a beef patty (or burger) substitute or analogue. It is noted that the use of plant materials may improve the healthiness of the (plant-based) patties, in comparison to red meat patties. A study suggests that, although both plant-based and meat-based patties exhibit comparable protein profiles and saturated fat levels, the plant-based patty possesses a richer amount of minerals and polyunsaturated fatty acids. The predominant minerals in both classifications (plant-based and meat-based burgers) were sodium, potassium, phosphorus, sulphur, calcium, and magnesium, while sodium and sulphur content exhibiting comparable levels across the groups. Approximately six amino acids varied between these two categories, in that plant-based burgers had a fourfold higher concentration of n-6 compared to meat-based burgers, along with a greater proportion of short-chain fatty acids (De Marchi, Massimo & Costa, Angela & Pozza, Marta & Goi, Arianna & Manuelian, Carmen. (2021). Detailed characterization of plant-based burgers. Scientific Reports. 11. 10.1038/s41598-021-81684-9.).

In an embodiment, the meat substitute is a dry food, a semi-moist food, a wet food, or any combination of these types of food. By "dry food" is meant one that has a moisture content less than 15 percent by weight. By " semi-moist food" is meant one that has a moisture content between 55 to 65 percent by weight. By " wet food" is meant one that has a moisture content between 75 to 85 percent by weight. Hereinafter, all percentages referred to are understood to be by weight unless specified otherwise and are based upon the weight of the final meat substitute product. Suitable examples of solid meat substitute include snacks. Suitable examples of snacks include a protein bar, a jerky, and/or the like. Suitable examples of semi-moist type food include chunks, meatloaf, patties, and/or the like. Suitable examples of wet type or liquid food include soup and/or the like.

In an embodiment, a degree of acceptance, the general liking or preference of one food over another, or the palatability of foods may be assessed by an affective test or assessment. The affective assessment may be performed by preference and/or acceptance assessments. Preference assessment is wherein the evaluated products (e.g. foods) are ranked by the panellists based on certain criteria such as flavour, colour, texture, and/or consistency. This encompasses paired preference and rank preference assessments. Acceptance assessment is wherein products (e.g. foods) are evaluated on a scale of acceptability. A combination of the above assessments can be used to gain the most insight into the acceptability of a product or food.

The meat substitute provided herein may not have all drawbacks of meat. For example, the meat substitute is healthier than meat. Moreover, the impact of the meat substitute on the environment (long term direct/indirect effect on climate change) is expected to be less detrimental than the known impact of (real or natural) meat. Additionally, the meat substitute may have a meat flavour mimicking a real meat flavour.

As described herein, the meat substitute may comprise an initial meat substitute, a myoglobin, and a fat composition. As described herein, "initial meat substitute" refers to the meat substitute without or before the addition of at least a myoglobin composition and/or a fat composition. In an embodiment, the initial meat substitute is plant-based. In an embodiment, the initial meat substitute is cultivated animal meat and/or comprises cultivated animal cells. In an embodiment, the initial meat substitute does not comprise animal cells. Wherever reference is made to "the meat substitute" in this application, both the initial meat substitute and the flavoured meat substitute are meant, unless explicitly stated otherwise.

### Flavours of meat substitutes

Meat generally comprises water, carbs, fats, proteins, vitamins, and minerals. Carbohydrates, proteins, and fats significantly contribute to flavour formation due to their abundance of essential flavour precursors. Heating induces the formation of diverse volatile flavour compounds (e.g., alkenes, alcohols, aldehydes, ketones, ethers, esters, carboxylic acids, sulfur-containing compounds, etc.) through the reactions of flavour precursors in the meat. The flavour of meat originates from inorganic salts, short peptides, free amino acids, and/or nucleic acid metabolites, including inosine and ribose. Aroma is generated by volatile flavour compounds, such as unsaturated aldehydes, ketones, heterocyclic compounds, and sulfur-containing compounds, typically produced through heating or cooking.

In an embodiment, the flavour compound is formed when the flavoured meat substitute is heated. The flavour components in meat that has been cooked result from intricate processes of breakdown, oxidation, reduction, and various other chemical reactions. The principal reactions comprise 1) the Maillard process involving amino acids and reducing sugars; 2) the oxidation of fatty acids; and/or 3) the thermal degradation of thiamine (Robbins, K., Jensen, J., Ryan, K. J., Homco-Ryan, C., McKeith, F. K., and Brewer, M. S. Effect of dietary vitamin E supplementation on textural and aroma attributes of enhanced beef clod roasts in a cook/hot-hold situation. Meat Sci. 64:317, 2003).

Thermal degradation of thiamine - a bicyclic molecule containing sulphur and nitrogen, generally found in meat products such as pork, beef, and/or chicken - generally produces a wide range of sulfur and nitrogen compounds, such as thiols, sulfides, and disulfides. Hydrogen sulfide is technically not a flavour compound, but it can react with ketones to form volatile compounds that possess a pronounced meaty flavour. For instance, 2-methyl-4,5-dihydroxy-3/4-thiophenethiol and 2-methyl-2,3-dihydroxy-3/4-thiophenethiol possess the unique flavours characteristic of roasted or boiled beef. 2-Methyl-3-furanthiol (MTF), an essential precursor of diverse thioether compounds associated with meaty flavour, is produced through the Maillard reaction involving ribose and cysteine or the Strecker reactions of sulfur-containing amino acids. Nevertheless, researchers discovered that the levels of MTF escalated four- to fivefold upon the introduction of little quantities of thiamine to the Maillard reaction system including ribose and cysteine. This suggests that thiamine is degraded to provide 2-methyl-3-furanthiol more efficiently, even at low concentrations, compared to the Maillard reaction. In the context of this invention, the addition of a myoglobin composition may enhance the cooked-meat flavour in the flavoured meat substitute even more, and/or synergistically enhance the cooked-meat flavour together with the fat composition in the flavoured meat substitute.

The Maillard reaction is an important nonenzymatic browning reaction that takes place during food processing, such as cooking or heating. It encompasses multifaceted interactions, including polymerisation and condensation, at elevated temperatures between compounds with free amino groups and carbonyl compounds (sometimes referred to as the carbonyl ammonia reaction). A variety of precursors associated with the Maillard reaction, for instance reducing sugars such as xylose, ribose, and glucose; amino acids such as methionine, cysteine, threonine, glycine, alanine, and serine; as well as flavour nucleotides such as 5'-IMP and 5'-GMP; and/or thiamine, possess the capacity to replicate or mimic meat aromas in plant-based meat substitutes. The reducing sugars in meat primarily originate from the degradation of glycogen and partly from energy metabolism, such as ribose, which is a byproduct of ATP decomposition. Among the amino acids involved in the Maillard reaction, cysteine is considered the most critical amino acid for generating meat-like flavour (Aaslyng, M. D., and Meinert, L. Meat flavour in pork and beef-From animal to meal. Meat Sci. 132:112, 2017). Consequently, the system of cysteine and ribose may generate meaty flavour in plant-based meat substitutes. Due to its cost-effectiveness as an isomer of ribose, xylose can also be utilised in the production of plant-based meat substitutes. In the cysteine and xylose system, there is the formation of relatively stable cyclic 2-threityl-thiazolidine-4-carboxylic acids, which bear a connection to compounds associated with meat-like flavours. For example, water-soluble compounds (in muscle tissues) are mainly involved in Maillard reaction.

Lipids are a class of macromolecules that are nonpolar and hydrophobic in nature. Major types include fats and oils, waxes, phospholipids, and steroids. Fats are a stored form of energy and are also known as triacylglycerols or triglycerides. Fats are made up of fatty acids and either glycerol or sphingosine. Fatty acids can be classified as unsaturated or saturated based on their presence or absence of double bonds in the hydrocarbon chain. Fatty acids comprising just single bonds are referred to as saturated fatty acids. Unsaturated fatty acids may have one or more double bonds within the hydrocarbon chain. Phospholipids are the fundamental structure of membranes. A glycerol or sphingosine backbone is connected to two fatty acid chains and a phosphate-containing group. Steroids are a distinct category of lipids. Their fundamental structure comprises four fused carbon rings. Cholesterol is a steroid and a crucial component of the plasma membrane, where it contributes to the membrane's fluidity. It is also the precursor to steroid hormones, including testosterone. In the context of the invention, fat and lipid may refer to each other. In an embodiment of this aspect of this invention, there is provided a method for flavouring a meat substitute, wherein the concentration of fat in the fat composition is at least 80 wt.%, 81 wt.%, 82 wt.%, 83 wt.%, 84 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 99 wt.%. The other components, at most 10%, of the composition may be for instance fat-soluble vitamins (such as A, D, E, and/or K), carotenoids or other natural color compounds, sterols, phosphatides, etc.

In an embodiment of this aspect of this invention, there is provided a method for flavouring a meat substitute, wherein the ratio of the number of saturated fatty acids (SFA) to the total number of fatty acids (FA) in the fat composition is at least 30%, preferably in the range of 30%-60%, 40-50%, or 40.3-52.1%.. In an embodiment, the range may be of 30%-55%, 30%-50%, 30%-45%, 30%-40%, 30%-35%, 35%-60%, 35%-55%, 35%-50%, 35%-45%, 35%-40%, 40%-60%, 45%-60%, 45%-55%, 45-50%, 50%-60%, 50%-55%, 55%-60%. In an embodiment, the ratio of SFA to FA may be 40.3%, 43%, 46.8%, 52.1%.

In the context of this invention, typical composition of fatty acids of animal fat is: saturated fatty acids (SFA): 40-50%; monounsaturated fatty acids (MFA): 40-60%; polyunsaturated fatty acids (PUFA): 5-15%. In an exemplary embodiment, it is possible that the composition of fatty acids of animal fat is 40-45% SFA, 40-45% MUFA, 5-10% PUFA. As an example, the total fatty acids composition may typically comprises 43% SFA, 50% MUFA, and 7%PUFA. As an example, the total fatty acids composition may typically comprise 51.99% SFA, 23.55% MUFA, and 6.75% PUFA, as observed in lamb fat. As an example, the total fatty acids composition may typically comprise 43.54% SFA, 36.59% MUFA, and 10.86% PUFA, as observed in pork fat. As an example, the total fatty acids composition may typically comprise 58.13% SFA, 30.55% MUFA, and 7.25% PUFA, as observed in beef fat. As an example, the total fatty acids composition may typically comprise 40.40% SFA, 28.63% MUFA, and 12.25% PUFA, as observed in turkey fat. As an example, the total fatty acids composition may typically comprise 43.77% SFA, 22.97% MUFA, and 22.17% PUFA, as observed in horse meat fat. As an example, the total fatty acids composition may typically comprise 43% SFA, 50% MUFA, and 7% PUFA, as observed in an alternative composition of beef fat. It is possible that each of the animal according to the invention may exhibit different percentage of each composition than mentioned herein as examples, due to various factors. For instance, due to diet or nutritional factors, stage of lactation, breed, specific cut of meat, age and maturity, environmental conditions, genetic polymorphisms, and/or individual animal variability.

In the context of this invention, typical SFA comprises palmitic acid and stearic acid, which constitute, for instance, about 25% and about 13%, respectively, of the total fatty acids. As an example, it is possible that the SFA comprises at least 10%, 15%, 20%, 21%, 22%, 23%, 24%, 25%, 26%, 27%, 28%, 29%, 30% palmitic acid of the total fatty acids. As an example, it is possible that the SFA comprises at least 10%, 11%, 12%, 13%, 14%, 15%, 16%, 17%, 18%, 19%, 20%, 21%, 22%, 23%, 24%, 25%, 26% stearic acid of the total fatty acids.

In the context of the invention, typical animal fat may comprise palmitic acid, oleic acid, stearic acid, myristic acid, and/or linoleic acid as major constituents; and/or cholesterol, arachidonic acid, elaidic acid, and/or vaccenic acid as minor constituents.

For instance, in the MUFA category, oleic acid alone may contribute about 40% to the total fatty acids. As an example, linoleic acid may account for more than 5% of the total fatty acids. As an example, arachidonic acid, may constitute about 0.8% of the fatty acid composition according to the invention.

In an embodiment, the ratio of the number of saturated fatty acids (SFA) and monounsaturated fatty acids (MUFA) to the total number of fatty acids (FA) in the fat composition is at least 70%,71%, 72%, 73%, 74%, 75%, 76%, 77%, 78%, 79%, 80%, 81%, 82%, 83%, 84%, 85%, 86%, 87%, 88%, 89%, 90%, 91 %, 92%, 93%, 94%, 95%, 96%, 97%.

In an embodiment, the ratio of the number of saturated fatty acids comprising 16 or more carbon atoms to the total number of fatty acids in the fat composition is at least 20%, at least 25%, at least 30%, at least 40%. Preferably, the saturated fatty acids referred to in this embodiment are unbranched.

In an embodiment, the ratio of the number of saturated fatty acids comprising 16 or more carbon atoms to the total number of fatty acids in the fat composition is in the range of 20%-60%, 25%-60%, 30%-60%, 35%-60%, 40%-60%, 20%-55%, 25%-55%, 30%-55%, 35%-55%, 40%-55%, 20%-50%, 25%-50%, 30%-50%, 35%-50%, 40%-50%, 20%-45%, 25%-45%, 30%-45%, 35%-45%, or 40%-45%. Preferably, the saturated fatty acids referred to in this embodiment are unbranched.

In an embodiment, the ratio of the number of saturated fatty acids comprising 16 to 20 carbon atoms to the total number of fatty acids in the fat composition is at least 20%, at least 25%, at least 30%, at least 40%. Preferably, the saturated fatty acids referred to in this embodiment are unbranched.

In an embodiment, the ratio of the number of saturated, unbranched fatty acids comprising 16 to 20 carbon atoms to the total number of fatty acids in the fat composition is in the range of 20%-60%, 25%-60%, 30%-60%, 35%-60%, 40%-60%, 20%-55%, 25%-55%, 30%-55%, 35%-55%, 40%-55%, 20%-50%, 25%-50%, 30%-50%, 35%-50%, 40%-50%, 20%-45%, 25%-45%, 30%-45%, 35%-45%, or 40%-45%. Preferably, the saturated fatty acids referred to in this embodiment are unbranched.

In an embodiment, the ratio of the number of saturated fatty acids comprising 16 to 20 carbon atoms to the total number of fatty acids in the fat composition is at least 20%, at least 25%, at least 30%, at least 40%, wherein the saturated fatty acids in this embodiment refer to palmitic acid, heptadecanoic acid, stearic acid and arachidic acid.

In an embodiment, the ratio of the number of saturated fatty acids comprising 16 to 20 carbon atoms to the total number of fatty acids in the fat composition is in the range of 20%-60%, 25%-60%, 30%-60%, 35%-60%, 40%-60%, 20%-55%, 25%-55%, 30%-55%, 35%-55%, 40%-55%, 20%-50%, 25%-50%, 30%-50%, 35%-50%, 40%-50%, 20%-45%, 25%-45%, 30%-45%, 35%-45%, or 40%-45%, wherein the saturated fatty acids in this embodiment refer to palmitic acid, heptadecanoic acid, stearic acid and arachidic acid.

In an embodiment, the ratio of the number of saturated fatty acids comprising 6 to 14 carbon atoms to the total number of fatty acids in the fat composition is lower than 15%, lower than 10%, lower than 5%. Preferably, the saturated fatty acids referred to in this embodiment are unbranched.

In an embodiment, the ratio of the number of saturated fatty acids comprising 6 to 14 carbon atoms to the total number of fatty acids in the fat composition is lower than 15%, lower than 10%, lower than 5%, wherein the saturated fatty acids in this embodiment refer to lauric acid and myristic acid.

In the context of the invention, typical fatty acids may comprise at least 4, 6, 8, 10, 12, 14, 16, 18, 20, 22, and/or 24 carbon chain. The specific combination and concentration of these fatty acids may contribute to overall flavor profile, especially more advantageous in combination with myoglobin according to this invention. In an embodiment, the fat composition may be sourced from animal fat, animal-derived fat, and/or non-animal fat. In an embodiment, the fat composition is sourced from animal fat and/or animal-derived fat. In a preferred embodiment, the fat composition is an animal fat, preferably a rendered or a non-rendered bovine fat. In an embodiment, the fat composition is a rendered fat, for instance a rendered bovine fat or ruminant fat (cattle or cows, sheeps, lambs, goats). Non-limitative examples of a rendered fat is tallow (rendered cow or beef, or venison fat), lard (rendered pork fat), ghee (rendered or clarified butter), schmaltz (rendered chicken fat), rendered duck or goose fat, bear grease (rendered bear fat). Rendering may enhance purity of the fat, since it may remove impurities, water, and proteins from the fat. This yields a more refined or purer fat that exhibits greater stability and an extended shelf life. Furthermore, rendered fats typically have higher smoke points, hence it may be suited for higher temperatures during cooking or heating. Thus, it may result in a more concentrated flavour of the flavoured meat substitute, and in combination with the myoglobin added as part of the myoglobin composition, the flavour is even more released which results in a more desirable taste of the flavoured meat substitute. Further, the flavoured meat substitute comprising myoglobin and rendered fat may exhibit better texture and thus better similarity to the real meat, or possibly even better than the real meat.

In another embodiment, the fat composition is a non-rendered fat, for instance a non-rendered bovine fat or ruminant fat (cattle or cows, sheeps, lambs, goats).

The fat composition of this invention is preferably produced by fermentation and/or cultivation. Hence, substantially no real or natural animal fat will be sourced in the process of this invention.

Lipid oxidation, preferably by means of thermal oxidation such as cooking or heating, produces volatile flavour compounds that play roles in flavoured meat and/or meat substitutes. In an embodiment of a process of the invention, a flavour compound is formed when the flavoured meat substitute is heated. The volatile flavour compounds generated in the fat or lipid oxidation may be more abundant than the compounds generated in the Maillard reaction. Hence, the fat or lipid oxidation may significantly influence the total flavour profile of the flavoured meat substitutes. Typically, lipid oxidation products may interact with Maillard reaction products, enhancing cooked-meat flavour. In the context of this invention, the addition of myoglobin composition may enhance the cooked-meat flavour in the flavoured meat substitute even more, and/or synergistically enhance the cooked-meat flavour together with the fat composition in the flavoured meat substitute.

In an aspect of the invention, a meat substitute may comprise a flavour precursor, in particular reducing sugars, carbohydrates, protein, amino acids, peptides, lipids, fatty acids, thiamine, and/or combination thereof. In an aspect of the invention, a meat substitute may comprise a flavour compound, in particular aldehyde, ketone, pyrazine, thiazole, heterocyclic compound, sulfhydryl compound, furan, aliphatic hydrocarbons, thiol, sulfides, disulfides, and/or combination thereof.

In an embodiment, the flavour compound is an aldehyde of a ketone, wherein the aldehyde or the ketone comprises more than 8 carbon atoms. In an embodiment, the flavour compound is an aldehyde comprising more than 8 carbon atoms, a pyrazine, or a thiazole.

In an embodiment, the flavoured meat substitute is expected to mimic the composition (such as similar fat, protein and/or heme iron content), palatability, flavour, color and/or aroma of meat, preferably the flavour is enhanced, without having all its drawbacks. In an embodiment, the flavoured meat substitute is expected to mimic the flavour and/or aroma of meat without having all its drawbacks. In an embodiment, the flavoured meat substitute is expected to mimic the palatability of meat without having all its drawbacks. In an embodiment, the flavoured meat substitute is expected to mimic the flavour of meat without having all its drawbacks. In an embodiment, the meat flavoured substitute is expected to mimic the aroma, taste, and/or flavour of meat without having all its drawbacks. In the embodiments of this context, this is mostly due to the presence of the myoglobin added as part of the myoglobin composition as described herein. In further embodiments of this context, in particular wherein the flavour of the flavoured meat substitute is enhanced, this is also due to the synergistic effect of the presence of the myoglobin and a fat composition as described in this invention. Alternatively, it might have an aspect, form, structure, texture, color, palatability, flavour, aroma and/or appearance which is distinct from the one of meat.

As described herein, an aroma (or an odour) typically occurs inside the nose and/or retronasal olfaction of the consumer, and relates to a sense of smell (i.e. through the back of the mouth where the nasal and mouth cavities are interlinked). Humans, for instance, can perceive approximately 10,000 distinct aromas.

As described herein, a taste refers to a sense inside the mouth of the consumer, typically including the tongue of the consumer, and describes sensations of saltiness, sweetness, sourness, bitterness, and/or umami.

As described herein, a flavour comprises the taste and the aroma. Other sensations, such as texture and temperature, may also contribute to the flavour perception. A flavour of a chemical compound is usually determined by its molecular structure and how it interacts with receptors in the consumer's tastebud and/or olfactory system.

Within the context of the invention, the meat experience may be mimicked when the flavoured meat substitute generates an aroma, taste, and/or a flavour compound recognizable by consumers and characteristic of some odorants and/or flavour compound released when meat is cooked. For example, the formation of some of these odorants may be catalyzed by the iron of heme present in the myoglobin added as part of the myoglobin composition. Without being bound to this theory, the formation may be due to lipid oxidation and/or Maillard reactions. This situation may be mimicked with the myoglobin within the flavoured meat substitute of the invention. It is henceforth surprising that the synergistic combination of the addition of a myoglobin composition and a fat composition in the initial meat substituteas described in the invention herein would lead to an improved flavouring process of the flavoured meat substitute.

### Method for flavouring a meat substitute

In an aspect of this invention, there is provided a method for flavouring a meat substitute, comprising the steps of:
a) providing an initial meat substitute not comprising animal cells;
b) adding a myoglobin composition and a fat composition to the initial meat substitute, wherein the myoglobin composition comprises at least 5.0 wt.% of a myoglobin on a dry matter basis,
c) obtaining a flavoured meat substitute wherein the concentration of myoglobin is at least 0.05 wt.%.

In an embodiment, the myoglobin composition being added to the initial meat substitute in step b) comprises at least 5.1 wt.%, 5.2 wt.%, 5.3 wt.%, 5.4 wt.%, 5.5 wt.%, 5.6 wt.%, 5.7 wt.%, 5.8 wt.%, 5.9 wt.%, 6.0 wt.%, 6.1 wt.%, 6.2 wt.%, 6.3 wt.%, 6.4 wt.%, 6.5 wt.%, 6.6 wt.%, 6.7 wt.%, 6.8 wt.%, 6.9 wt.%, 7.0 wt.%, 7.1 wt.%, 7.2 wt.%, 7.3 wt.%, 7.4 wt.%, 7.5 wt.%, 7.6 wt.%, 7.7 wt.%, 7.8 wt.%, 7.9 wt.%, 8.1 wt.%, 8.2 wt.%, 8.3 wt.%, 8.4 wt.%, 8.5 wt.%, 8.6 wt.%, 8.7 wt.%, 8.8 wt.%, 8.9 wt.%, 9.0 wt.%, 9.1 wt.%, 9.2 wt.%, 9.3 wt.%, 9.4 wt.%, 9.5 wt.%, 9.6 wt.%, 9.7 wt.%, 9.8 wt.%, 9.9 wt.%, or 10.0 wt.% of a myoglobin.

In an embodiment, the myoglobin composition being added to the initial meat substitute in step b) comprises between 5.0-10 wt.%, 6.0-9.0 wt.%, 7.0-9.0 wt.%, 8.0-9.0 wt.%, 8.1-8.8 wt.%, or 8.2-8.6 wt.% of a myoglobin, preferably comprises 8.4 wt.% of a myoglobin. In another embodiment, the myoglobin composition being added to the initial meat substitute in step b) comprises at least 20 wt.% of a myoglobin.

As described herein, the weight percentage of a myoglobin in the myoglobin composition is based on dry weight and/or refers to the total dry matter of myoglobin. For instance, the myoglobin is 8.4 wt.% of the total dry matter of the myoglobin composition. As described herein, a concentration of a compound in a composition "on a dry matter basis" refers to the concentration in compound in the composition from which all or substantially all water has been removed.

In an embodiment, the weight concentration of myoglobin in the flavoured meat substitute is up to 0.11%, 0.12%, 0.13%, 0.14%, 0.15%, 0.16%, 0.17%, 0.18%, 0.19%, 0.20%, 0.21%, 0.22%, 0.23%, 0.24%, 0.25%, 0.26%, 0.27%, 0.28%, 0.29%, 0.30%, 0.31%, 0.32%, 0.33%, 0.34%, 0.35%, 0.36%, 0.37%, 0.38%, 0.39%, 0.40%, 0.41%, 0.42%, 0.43%, 0.44%, 0.45%, 0.46%, 0.47%, 0.48%, 0.49%, or 0.50%.

In an embodiment, the weight concentration of myoglobin in the flavoured meat substitute is 0.10%, 0.11%, 0.12%, 0.13%, 0.14%, 0.15%, 0.16%, 0.17%, 0.18%, 0.19%, 0.20%, 0.21%, 0.22%, 0.23%, 0.24%, 0.25%, 0.26%, 0.27%, 0.28%, 0.29%, 0.30%, 0.31%, 0.32%, 0.33%, 0.34%, 0.35%, 0.36%, 0.37%, 0.38%, 0.39%, or 0.40%.

In an embodiment, the weight concentration of myoglobin in the flavoured meat substitute is in the range of 0.05 wt.% to 0.10%, 0.11%, 0.12%, 0.13%, 0.14%, 0.15%, 0.16%, 0.17%, 0.18%, 0.19%, 0.20%, 0.21%, 0.22%, 0.23%, 0.24%, 0.25%, 0.26%, 0.27%, 0.28%, 0.29%, 0.30%, 0.31%, 0.32%, 0.33%, 0.34%, 0.35%, 0.36%, 0.37%, 0.38%, 0.39%, or 0.40%.

In an embodiment, the weight concentration of myoglobin in the flavoured meat substitute is in the range of 0.1 wt.% to 0.15%, 0.16%, 0.17%, 0.18%, 0.19%, 0.20%, 0.21%, 0.22%, 0.23%, 0.24%, 0.25%, 0.26%, 0.27%, 0.28%, 0.29%, 0.30%, 0.31%, 0.32%, 0.33%, 0.34%, 0.35%, 0.36%, 0.37%, 0.38%, 0.39%, or 0.40%.

In this application, "wt.%" may be used for a weight concentration expressed as a percentage.

In the application, concentration of myoglobin in a flavoured meat substitute refers to the total concentration of myoglobin, meaning that the myoglobin referred to may have been present in the initial meat substitute before step b) of the method of the invention, or may have been added to the flavoured meat substitute as a part of the myoglobin composition during step b). Wherever features of "a" or "the" myoglobin are specified, reference is preferably made to the myoglobin added as a part of (i.e. comprised in) the myoglobin composition during step b).

In a preferred embodiment, there is provided a method for flavouring a meat substitute, comprising the steps of:
a) providing an initial meat substitute not comprising animal cells;
b) adding a myoglobin composition and a fat composition to the initial meat substitute, wherein the myoglobin composition comprises at least 5.0 wt.% of a myoglobin on a dry matter basis,
c) obtaining a flavoured meat substitute wherein the concentration of myoglobin is in the range of 0.05-1.50 wt.%, 0.05-1.0 wt.%, 0.10-1.0 wt.%, 0.10-0.50 wt.%, 0.10-0.30 wt.%, 0.10-0.20 wt.%,
or preferably 0.20 wt.%. This embodiment is surprisingly more advantageous for the manufacturers as well as consumers with regard to the ratio of the cost effectiveness and product quality.

In an embodiment, there is provided a method for flavouring a meat substitute, wherein the concentration of myoglobin in the flavoured meat substitute is preferably in the range of 0.10-0.50 wt%, 0.10-0.45 wt%, 0.10-0.40 wt%, 0.10-0.38 wt%, 0.10-0.35 wt%, 0.10-0.30 wt%, 0.10-0.20 wt%, 0.15-0.20 wt.%, 0.15-0.25 wt.%, 0.20-0.50 wt%, 0.20-0.45 wt%, 0.20-0.40 wt%, 0.20-0.38 wt%, 0.20-0.35 wt%, 0.20-0.30 wt%,0.20-0.25 wt%, 0.25-0.50 wt%,0.25-0.45 wt%, 0.25-0.40 wt%, 0.25-0.38 wt%, 0.25-0.35 wt%, 0.25-0.30 wt%, 0.30-0.50 wt%, 0.30-0.45 wt%, 0.30-0.40 wt%, 0.30-0.38 wt%, 0.30-0.35 wt%, 0.35-0.50 wt%, 0.35-0.45 wt%, 0.35-0.40 wt%, or 0.35-0.38 wt%.

In an embodiment of this aspect of this invention, there is provided a method for flavouring a meat substitute, comprising the step of a1) producing the myoglobin composition via fermentation and/or cultivation. In an embodiment, the fermentation is microbial fermentation. In an embodiment, the myoglobin may be a recombinant myoglobin. In an embodiment, the myoglobin is considered a recombinant myoglobin and is produced by a microorganism which has been genetically modified to express the recombinant myoglobin. In an embodiment, said method uses a microorganism as described in the invention. In an embodiment, said microorganisms which has been genetically modified to express the recombinant myoglobin comprises a nucleic acid encoding said recombinant myoglobin. These nucleic acids sequence may need to be codon-optimized in order to be expressed by the microorganism.

In an embodiment of this aspect of this invention, there is provided a method for flavouring a meat substitute, wherein the concentration of myoglobin in the initial meat substitute is or less than 0.01 wt.%. In an embodiment, the concentration of myoglobin in the initial meat substitute is less than 0.10 wt%, 0.09 wt%, 0.08 wt%, 0.07 wt%, 0.06 wt%, 0.05 wt%, 0.04 wt%, 0.03 wt%, 0.02 wt%, 0.01 wt%, 0.009 wt%, 0.008 wt%, 0.007 wt%, 0.006 wt%, 0.005 wt%, 0.004 wt%, 0.003 wt%, 0.002 wt%, 0.001 wt%. In an embodiment, it is preferable that the initial meat substitute does not comprise myoglobin.

In an embodiment of this aspect of this invention, there is provided a method for flavouring a meat substitute, wherein the myoglobin added as part of the myoglobin composition is represented by any one of SEQ ID NOs: 1-14 .

In an embodiment of this aspect of this invention, there is provided a method for flavouring a meat substitute, wherein the concentration of fat in the fat composition is at least 80 wt.%. In another embodiment, it is also possible that the concentration of fat in the fat composition is at least 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 99 wt.%.

In an embodiment of this aspect of this invention, there is provided a method for flavouring a meat substitute, wherein the ratio of the number of saturated and mono-unsaturated fatty acids to the total number of fatty acids in the fat composition is at least 50 percent, preferably at least 60 percent. In another embodiment, it is also possible that the ratio of the number of saturated and mono-unsaturated fatty acids to the total number of fatty acids in the fat composition is at least 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%.

In an embodiment of this aspect of this invention, there is provided a method for flavouring a meat substitute, comprising the step of a2) producing the fat composition via fermentation and/or cultivation.

In an embodiment of this aspect of this invention, there is provided a method for flavouring a meat substitute, wherein the fat composition is an animal fat, preferably a rendered or a non-rendered bovine fat.

In an embodiment of this aspect of this invention, there is provided a method for flavouring a meat substitute, wherein the initial meat substitute is plant-based. Preferably, the initial meat substitute is animal free. Preferably, the initial meat substitute comprises a single cell protein. As described herein, the term single cell protein refers to a protein derived from single-celled microorganisms such as algae, fungi, yeast, and/or bacteria. As described herein, any protein from microbial sources may be in the form of biomass and/or extracted protein.

Preferably, the initial meat substitute comprises a protein alternative to animal protein, such as, but not limited to, fermentation-derived protein (e.g. precision and/or biomass fermentations), and/or algae family-sourced protein and protein derived therefrom.

Preferably, the initial meat substitute comprises a protein derived from fungi. In particular, the protein thereof is derived from a filamentous fungus, such as *Fusarium venenatum.* A non-limitative example of the protein thereof is a mycoprotein. Other examples of a protein derived fungi is Typically, Filamentous fungi are increasingly significant in protein production due to the modification of strains to generate numerous secreted proteins or specific target proteins, such as hydrophobic proteins or antimicrobial peptides, in specialised fungal hosts. Any protein derived from such fungi that are suitable may be envisaged in the initial meat substitute of this invention.

In an embodiment of this aspect of this invention, there is provided a method for flavouring a meat substitute, wherein the initial meat substitute does not comprise animal cells.

In an embodiment of this aspect of this invention, there is provided a method for flavouring a meat substitute, wherein a flavour compound is formed when the flavoured meat substitute is heated. In an embodiment, the heated temperature is at least 60°C, 70°C, 80°C, 90°C, 100°C, 110°C, 120°C, 130°C, 140°C, 150°C, 160°C, 170°C, 180°C, 190°C, 200°C. In an embodiment, the heated temperature is in the range of 60°C -200°C, 60°C -190°C, 60°C -180°C, 60°C -170°C, 60°C -160°C, 60°C -150°C, 60°C -140°C, 60°C -130°C, 60°C -120°C, 70°C -200°C, 70°C -190°C, 70°C -180°C, 70°C -170°C, 70°C -160°C, 70°C -150°C, 70°C -140°C, 70°C -130°C, 70°C -120°C, 70°C -110°C, 70°C -100°C, 80°C -200°C, 80°C -190°C, 80°C -180°C, 80°C -170°C, 80°C -160°C, 80°C -150°C, 80°C -140°C, 80°C -130°C, 80°C -120°C, 80°C -110°C, 80°C -100°C, 90°C -200°C, 90°C -190°C, 90°C -180°C, 90°C -170°C, 90°C -160°C, 90°C -150°C, 90°C -140°C, 90°C -130°C, 90°C -120°C, 90°C -110°C, 90°C -100°C, 100°C -200°C, 100°C -190°C, 100°C -180°C, 100°C -170°C, 100°C - 160°C, 100°C -150°C, 100°C -140°C, 100°C -130°C, 100°C -120°C, 100°C -110°C, 110°C -200°C, 110°C -190°C, 110°C -180°C, 110°C -170°C, 110°C -160°C, 110°C -150°C, 110°C -140°C, 110°C -130°C, 110°C -120°C, 120°C -200°C, 120°C-190°C, 120°C -180°C, 120°C -170°C, 120°C -160°C, 120°C -150°C, 120°C -140°C, 120°C -130°C, 130°C -200°C, 130°C -190°C, 130°C -180°C, 130°C -170°C, 130°C -160°C, 130°C -150°C, 130°C -140°C. In an embodiment, the flavoured meat substitute may optimally benefit from the effect of the invention when heated in the temperature range of 140-165°C (284-329°F).

In an embodiment of this aspect of this invention, there is provided a method for flavouring a meat substitute, wherein the flavour compound is an aldehyde of a ketone. In an embodiment, the aldehyde or the ketone may comprise at least 5, 6, 7, 8, 9, 10, 11, 12, 13, 14, 15, 16, 17, 18, 19, 20 carbon atoms, In a preferred embodiment, the aldehyde or the ketone may comprise at least 6, 7, or more preferably at least 8 carbon atoms. In an embodiment, the flavour compound may further comprise a pyrazine or a thiazole.

In an embodiment of this aspect of this invention, there is provided a method for flavouring a meat substitute, wherein the flavour compound is an aldehyde comprising at least 6, 7, more preferably at least 8 carbon atoms, a pyrazine, or a thiazole.

In an aspect of this invention, there is provided a meat substitute obtainable by a method of any one of the method described herein in the invention.

In an embodiment of the invention, wherein a meat substitute is preferably a raw meat substitute, said raw meat substitute is expected to mimick the bloody and/or metallic aroma of meat. Preferably, the flavoured meat substitute is able to mimick the bloody and/or metallic aroma of meat to a higher degree than other meat substitutes (i.e. not according to the invention). In the context of this invention, "raw" means not subjected to a heat treatment, preferably uncooked and/or ungrilled.

In an embodiment of the invention, wherein a meat substitute, preferably a cooked meat substitute, wherein said cooked meat substitute is expected to mimick the roasted characteristics of meat, particularly of grilled meat, i.e. grilled patties. Preferably, the flavoured meat substitute is able to mimick the roasted aroma, taste, texture, and/or flavour of meat to a higher degree than other meat substitutes (i.e. not according to the invention). In the context of this invention, "cooked" means subjected to a heat treatment, preferably grilled, fried, and/or roasted.

In the context of this invention, and specifically in the embodiments in this section, an "other meat substitute" or "a meat substitute not according to the invention" is preferably a plant-based meat substitute comprising a recombinant soy leghemoglobin (LegH).

In an embodiment, the flavoured meat substitute, preferably a grilled meat substitute of the invention, has an aroma characterized by a higher concentration of oxidized lipids, lipid oxidation products, pyrazines and/or pyrroles in the volatile compounds obtained from the (grilled) meat substitute relative to other meat substitutes (i.e. not according to the invention). Higher preferably means at least 10%, 20%, 30%, 40%, 50%, 60%, 70%, 80%, 90%, 100%, 110%, 120%, 130%, 140%, 150%, 160%, 170%, 180%, 190%, 200%, 210%, 220%, 230%, 240%, 250%, 260%, 270%, 280%, 290%, or 300%. Preferred pyrazines are methylpyrazine, 2,5-dimethylpyrazine, 2-ethyl-6-methylpyrazine. A preferred pyrrole is pyrrole. Preferred lipid oxidation products are 2-methylbutanal and 3-methylbutanal.

Aromas from meat substitute containing different concentrations of recombinant myoglobin may be analyzed using gas chromatography-mass spectrometry (GC-MS) with headspace solid-phase microextraction (HS-SPME).

Within the context of the invention, the meat experience may be mimicked when the color of the flavoured meat substitute is similar with the color of meat. The color of meat is determined by the concentration of heme-containing protein and/or by its oxidation state in the meat. Therefore, the total amount of the myoglobin added as part of the myoglobin composition to the initial meat substitute will determine the color of the flavoured meat substitute.

In an embodiment, the flavoured meat substitute, preferably a raw meat substitute, is expected to mimick the color of a meat, preferably of raw meat. Without being bound to this theory, the color of the flavoured meat substitute is mostly due to the addition of the myoglobin in step b) of the method of the invention. Preferably, the flavoured meat substitute of the invention is able to mimick the color of meat to a higher degree than other meat substitutes (i.e. not according to the invention).

In a preferred embodiment, the color of the flavoured meat substitute, preferably of a raw meat substitute of the invention, is essentially stable for at least 1, 2, 3, 4, 5, 6, 7, 8, 9, 10, 11, 12, 13, 14, 15, 16, 17, 18, 19 or 20 days, preferably upon storage under constant light at 4°C. Preferably, the color of the flavoured meat substitute of the invention is stable for 1, 2, 3, 4, 5, 6, 7, 8, 9, 10, 11, 12, 13, 14, 15, 16, 17, 18, 19 or 20 days longer than the time period wherein the color of meat or other meat substitutes is stable, more preferably wherein a ΔE change from 0% up to 10% is defined as stable. Essentially stable for at least X days preferably means a change of ΔE of the flavoured meat substitute between 0% and 0.5%, 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, 12%, 12.5%, 13%, 13.5%, 14%, 14.5%, 15%, 15.5%, 16%, 16.5%, 17%, 17.5%, 18%, 18.5%, 19%, 19.5%, or 20% between day 0 and day X, wherein ΔE is. Most preferably, ΔE of the flavoured meat substitute does not change by more than 10% upon storage for at least 1, 2, 3, 4, 5, 6, 7, 8, 9, 10, 11, 12, 13, 14, 15, 16, 17, 18, 19 or 20 days. The color may be assessed via absorbance measurements using spectrometry.

Within the context of the invention, the meat experience may be mimicked when the composition of the flavoured meat substitute is similar with the composition of meat. The composition of the flavoured meat substitute may be seen to be similar to the meat composition when the same or similar components are present and optionally when the quantities in which they are present is the same or similar with the quantities present in meat. For example a similar fat, protein and/or heme iron content may be present in a meat substitute as in meat.

### Myoglobin

Myoglobin is a relatively small globular protein of about 17 kDa, found in heart and skeletal muscles. It carries a single heme group with an atom of iron capable of reversible oxygen binding, allowing myoglobin to transport oxygen from the cell surface to mitochondria. Myoglobin contains 153 amino acids and as with other globins, consists of eight alpha helices connected by loops. Myoglobin contains a porphyrin ring with an iron at its center. A proximal histidine group (His-93) is attached directly to iron, and a distal histidine group (His-64) hovers near the opposite face. Myoglobin is an iron- and oxygen-binding protein found in the cardiac and skeletal muscle tissue of vertebrates in general and in almost all mammals. Muscle cells use myoglobin to accelerate oxygen diffusion and act as localized oxygen reserves for times of intense respiration.

In the embodiments below, features of a myoglobin comprised in the flavoured meat substitutes of the invention are described. Preferably, these embodiments apply to the myoglobin added as part of the myoglobin composition in step b) of the method of the invention.

In an embodiment, the flavoured meat substitute of the present invention comprises a myoglobin. In an embodiment, the myoglobin may be derived from steppe mammoth (*Mammuthus trogontherii*), woolly mammoth (*Mammuthus primigenius*), pig, sheep, cow, chicken, rabbit, bovine, mouse, rat, tuna, salmon, blue bonito, or sword fish. Myoglobin amino acid sequences from steppe mammoth, woolly mammoth, pig, sheep, cow, chicken, rabbit, bovine, mouse, rat, tuna, salmon, blue bonito, or sword fish have been disclosed later on by a given SEQ ID NO:1-14. In a preferred embodiment, the myoglobin may be derived from steppe mammoth (*Mammuthus trogontherii*) or woolly mammoth (*Mammuthus primigenius*).

In an embodiment, the myoglobin is derived from steppe mammoth, woolly mammoth, pig, sheep, cow, chicken, rabbit, bovine, mouse, rat, tuna, salmon, blue bonito, or sword fish by addition, insertion, deletion and/or substitution of at least one amino acid. Addition, insertion, deletion and/or substitutions of two, three, four, five, six, seven, eight, nine or ten amino acids is also contemplated by the invention.

In an embodiment, the myoglobin is a steppe mammoth myoglobin, woolly mammoth myoglobin, pig myoglobin, sheep myoglobin, cow myoglobin, chicken myoglobin, rabbit myoglobin, bovine myoglobin, mouse myoglobin, rat myoglobin, tuna myoglobin, salmon myoglobin, blue bonito myoglobin, or sword fish myoglobin or a myoglobin derived from any of these myoglobin.

In an embodiment, the myoglobin is steppe mammoth myoglobin (such as SEQ ID NO: 1) or derived therefrom. In an embodiment, the myoglobin is woolly mammoth myoglobin (such as SEQ ID NO: 2) or derived therefrom. In an embodiment, the myoglobin is pig myoglobin (such as SEQ ID NO: 3) or derived therefrom. In an embodiment, the myoglobin is sheep myoglobin (such as SEQ ID NO: 4) or derived therefrom. In an embodiment, the myoglobin is cow myoglobin (such as SEQ ID NO: 5) or derived therefrom. In an embodiment, the myoglobin is chicken myoglobin (such as SEQ ID NO: 6) or derived therefrom. In an embodiment, the myoglobin is rabbit myoglobin (such as SEQ ID NO: 7) or derived therefrom. In an embodiment, the myoglobin is bovine myoglobin (such as SEQ ID NO: 8) or derived therefrom. In an embodiment, the myoglobin is mouse myoglobin (such as SEQ ID NO: 9) or derived therefrom. In an embodiment, the myoglobin is rat myoglobin (such as SEQ ID NO: 10) or derived therefrom. In an embodiment, the myoglobin is tuna myoglobin (such as SEQ ID NO: 11) or derived therefrom. In an embodiment, the myoglobin is salmon myoglobin (such as SEQ ID NO: 12) or derived therefrom. In an embodiment, the myoglobin is blue bonito myoglobin (such as SEQ ID NO: 13) or derived therefrom. In an embodiment, the myoglobin is sword fish myoglobin (such as SEQ ID NO: 14) or derived therefrom.

In an embodiment, the myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with any one of the SEQ ID NOs: 1-14. In an embodiment, the myoglobin comprises a sequence having at least 95% identity with any one of SEQ ID NO: 1 to 14. In an embodiment, the myoglobin is represented by a sequence having at least 95% identity with any one of SEQ ID NO: 1 to 14.

In an embodiment, the myoglobin is steppe mammoth myoglobin (SEQ ID NO: 1). In an embodiment, the myoglobin is woolly mammoth myoglobin (SEQ ID NO: 2). In an embodiment, the myoglobin is pig myoglobin (SEQ ID NO: 3). In an embodiment, the myoglobin is sheep myoglobin (SEQ ID NO: 4). In an embodiment, the myoglobin is cow myoglobin (SEQ ID NO: 5). In an embodiment, the myoglobin is chicken myoglobin (SEQ ID NO: 6). In an embodiment, the myoglobin is rabbit myoglobin (SEQ ID NO: 7). In an embodiment, the myoglobin is bovine myoglobin (SEQ ID NO: 8). In an embodiment, the myoglobin is mouse myoglobin (SEQ ID NO: 9). In an embodiment, the myoglobin is rat myoglobin (SEQ ID NO: 10). In an embodiment, the myoglobin is tuna myoglobin (SEQ ID NO: 11). In an embodiment, the myoglobin is salmon myoglobin (SEQ ID NO: 12). In an embodiment, the myoglobin is blue bonito myoglobin (SEQ ID NO: 13). In an embodiment, the myoglobin is sword fish myoglobin (SEQ ID NO: 14).

In an embodiment, the myoglobin is derived from steppe mammoth myoglobin (SEQ ID NO: 1). In an embodiment, the myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 1. A nucleic acid encoding said myoglobin which is derived from steppe mammoth myoglobin (SEQ ID NO:1) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:15.

In an embodiment, the myoglobin is derived from woolly mammoth myoglobin (SEQ ID NO: 2). In an embodiment, the myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 2. A nucleic acid encoding said myoglobin which is derived from woolly mammoth myoglobin (SEQ ID NO: 2) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:16.

In an embodiment, the myoglobin is derived from pig myoglobin (SEQ ID NO: 3). In an embodiment, the myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 3. A nucleic acid encoding said myoglobin which is derived from pig myoglobin (SEQ ID NO: 3) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:17.

In an embodiment, the myoglobin is derived from Sheep myoglobin (SEQ ID NO: 4). In an embodiment, the myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 4. A nucleic acid encoding said myoglobin which is derived from Sheep myoglobin (SEQ ID NO: 4) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:18.

In an embodiment, the myoglobin is derived from cow myoglobin (SEQ ID NO: 5). In an embodiment, the myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 5. A nucleic acid encoding said myoglobin which is derived from cow myoglobin (SEQ ID NO: 5) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:19.

In an embodiment, the myoglobin is derived from chicken myoglobin (SEQ ID NO: 6). In an embodiment, the myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 6. A nucleic acid encoding said rmyoglobin which is derived from chicken myoglobin (SEQ ID NO: 6) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:20.

In an embodiment, the myoglobin is derived from rabbit myoglobin (SEQ ID NO: 7). In an embodiment, the myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 7. A nucleic acid encoding said myoglobin which is derived from rabbit myoglobin (SEQ ID NO: 7) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:21.

In an embodiment, the myoglobin is derived from bovine myoglobin (SEQ ID NO: 8). In an embodiment, the myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 8. A nucleic acid encoding said myoglobin which is derived from bovine myoglobin (SEQ ID NO: 8) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:22.

In an embodiment, the myoglobin is derived from mouse myoglobin (SEQ ID NO: 9). In an embodiment, the myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 9. A nucleic acid encoding said myoglobin which is derived from mouse myoglobin (SEQ ID NO: 9) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:23.

In an embodiment, the myoglobin is derived from rat myoglobin (SEQ ID NO: 10). In an embodiment, the myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 10. A nucleic acid encoding said myoglobin which is derived from rat myoglobin (SEQ ID NO: 10) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:24.

In an embodiment, the myoglobin is derived from tuna myoglobin (SEQ ID NO: 11). In an embodiment, the myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 11. A nucleic acid encoding said myoglobin which is derived from tuna myoglobin (SEQ ID NO: 11) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:25.

In an embodiment, the myoglobin is derived from salmon myoglobin (SEQ ID NO: 12). In an embodiment, the myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 12. A nucleic acid encoding said myoglobin which is derived from salmon myoglobin (SEQ ID NO: 12) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:26.

In an embodiment, the myoglobin is derived from blue bonito myoglobin (SEQ ID NO: 13). In an embodiment, the myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 13. A nucleic acid encoding said myoglobin which is derived from blue bonito myoglobin (SEQ ID NO: 13) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:27.

In an embodiment, the myoglobin is derived from sword fish myoglobin (SEQ ID NO: 14). In an embodiment, the myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 14. A nucleic acid encoding said myoglobin which is derived from sword fish myoglobin (SEQ ID NO: 14) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:28.

Myoglobin which may be represented by SEQ ID NO: 1-14 may be encoded by nucleic acids which may be represented by SEQ ID NO: 15-28, respectively. It is understood that the nucleic acids sequence encoding myoglobin or derivatives thereof as described above may need to be codon-optimized in order to be expressed by the microorganism or in order to optimize their production by the microorganism. In the context of the invention the myoglobin used may be considered as a recombinant protein.

The method for flavouring a meat substitute comprises adding an myoglobin composition, wherein the myoglobin composition comprises at least 5.0 wt.% of a myoglobin on a dry matter basis. The myoglobin composition may be added or applied by manufacturer of a meat substitute, the consumer of a meat substitute, or any other producer of a meat substitute or related product.

In an embodiment, the (total) weight concentration of heme-proteins in the flavoured meat substitute is at least 10%, 20%, 30%, 40%, 50%, 60%, 70%, 80%, 90%, 100%, 110%, 120%, 130%, 140%, 150%, 160%, 170%, 180%, 190%, 200%, 210%, 220%, 230%, 240%, 250%, 260%, 270%, 280%, 290%, or 300% higher than the average concentration of heme-proteins in a meat substitute product produced from traditional or common process which does not explicitly comprise a step of adding the myoglobin composition. In this context, the average concentration of heme-proteins in meat of a specific species of an animal is determined over several corresponding animals, wherein no myoglobin composition or exogeneous or myoglobin has been added to the meat of the animals after harvesting. In this context, the resulting meat substitute product of this invention is edible for a consumer defined herein, and the addition of heme-proteins, in particular myoglobin, using the method of this invention does not introduce toxicity or affect the food safety of said meat substitute product.

In an embodiment, the (total) weight concentration of heme-proteins in the flavoured meat substitute is at least 0.05%, 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, preferably lower than 3%, more preferably lower than 1%.

In an embodiment, the (total) weight concentration of myoglobin in the flavoured meat substitute is at least 0.05%, 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, preferably lower than 3%, more preferably lower than 1%. It is understood that the myoglobin comprised in the flavoured meat substitute may originate from the addition of the myoglobin composition, or from another source.

In an embodiment, the weight fraction of myoglobin in the heme-proteins in the flavoured meat substitute is at least 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, or 99%.

In an embodiment, the (total) weight concentration of heme-proteins in the flavoured meat substitute is at least 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, and the weight fraction of myoglobin in the heme-proteins in the flavoured meat substitute is at least 90%.

In an embodiment, the (total) weight concentration of heme-proteins in the flavoured meat substitute is at least %, and the weight fraction of myoglobin in the heme-proteins in the flavoured meat substitute is at least 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, or 99%.

In an embodiment, at least 50%, 55%, 60%, 65%, 70%, 75%, 80%, 85%, 90%, or 95% of heme-proteins in the flavoured meat substitute originate from the addition of the myoglobin composition (per weight). In a more preferred embodiment, at least 50%, 55%, 60%, 65%, 70%, 75%, 80%, 85%, 90%, or 95% of myoglobin in the flavoured meat substitute originate from the addition of the myoglobin composition (per weight).

In an embodiment, at least 50%, 55%, 60%, 65%, 70%, 75%, 80%, 85%, 90%, or 95% of myoglobin in the flavoured meat substitute originate from the addition of the myoglobin composition (per weight). In a more preferred embodiment, at least 50%, 55%, 60%, 65%, 70%, 75%, 80%, 85%, 90%, or 95% of myoglobin in the flavoured meat substitute originate from the addition of the myoglobin composition (per weight).

In an embodiment, the weight concentration of the myoglobin in the myoglobin composition is at least 5%, at least 10%, at least 15%, at least 20%, at least 25%, at least 30%, at least 35%, at least 40%, at least 45%, at least 50%, at least 55%, at least 60 %, at least 65%, at least 70%, at least 75%, at least 80%, at least 85%, at least 90 %. In this context, weight concentration may be expressed as a mass of myoglobin per total solids of the composition. As described herein, a solid may refer to a liquid and/or a dry product of the invention.

In an embodiment, the weight fraction of the myoglobin in the protein fraction comprised in the myoglobin composition is at least 10%, at least 15%, at least 20%, at least 25%, at least 30%, at least 35%, at least 40%, at least 45%, at least 50%, at least 55%, at least 60 %, at least 65%, at least 70%, 75%, at least 80%, at least 85%, at least 90 %, at least 95%, at least 96%, at least 97%, at least 98%, at least 99%. In this context, weight fraction is a dimensionless numbers which may be interpreted as a mass of myoglobin per mass of protein.

In an embodiment, the myoglobin composition is in the form of powder. The amount of the myoglobin needed to be added to the (initial) meat substitute may be calculated or estimated based on the concentration of myoglobin in the (initial) meat substitute before the addition and the desired final concentration of myoglobin in the flavoured meat substitute. In this context, the (initial) meat substitute before addition of the myoglobin composition preferably contains less than 0.1%, less than 0.2 %, less than 0.3 %, less than 0.4 %, less than 0.5%, less than 0.6 %, less than 0.7%, less than 0.8 %, less than 0.9 %, less than 1.0 % heme-proteins per weight basis. A tool, such as a container, a cup, a spoon, a blender, a mixer, may be used to add the myoglobin composition. The myoglobin composition may be added directly to the (initial) meat substitute, or may be dissolved in an editable solvent, prior to be added to the (initial) meat substitute.

In an embodiment, the myoglobin composition is in the form of solid shapes, wherein the solid shaped myoglobin has a pre-determined weight and/or volume. The amount of the myoglobin composition needed to be added to the (initial) meat substitute may be calculated or estimated based on the concentration of the myoglobin in the myoglobin composition, and/or the volume of the solid-shaped myoglobin composition, the total weight of the (initial) meat substitute and the desired final amount of myoglobin in the flavoured meat substitute. In this context, the (initial) meat substitute before addition of the myoglobin composition preferably contains less than 0.1%, less than 0.2 %, less than 0.3 %, less than 0.4 %, less than 0.5%, less than 0.6 %, less than 0.7%, less than 0.8 %, less than 0.9 %, less than 1.0 % heme-proteins per weight basis. A tool, such as a container, a cup, a spoon, a blender, a mixer, may be used to add the myoglobin composition. The myoglobin composition may be added directly to the (initial) meat substitute, or may be dissolved in a food grade solvent, prior to be added to the (initial) meat substitute.

It is understood by the skilled person that the meat substitute before addition of myoglobin composition is the initial meat substitute. In an embodiment of this invention, the initial meat substitute may not comprise animal cells.

In all aspects, the flavoured meat substitute may also be (suitable for) a pet food. In an embodiment, the flavoured meat substitute suitable for pet food may comprise a myoglobin, wherein the myoglobin is added to cross-link with another substance, for example a pea vicilin protein.

### Fermentation and/or cultivation

In an embodiment, the myoglobin composition is obtained from fermentation, preferably a microbial fermentation. In an embodiment of this aspect of this invention, there is provided a method for flavouring a meat substitute, comprising the step of producing the myoglobin composition via fermentation. In an embodiment, the fat composition is a fat composition obtained from fermentation, preferably microbial fermentation.

In another embodiment, the fat composition being added with the myoglobin composition is obtained from cultivation. Cultivation in this invention refers to the in vitro growth and maintenance of cells, preferably animal cells, on a cell culture base to produce the fat composition. In an embodiment of this aspect of this invention, there is provided a method for flavouring a meat substitute, comprising the step of producing the myoglobin composition via cultivation. In an embodiment, the fat composition is a fat composition obtained from cultivation. The production of fat through cultivation is a biotechnological method in which fat-producing cells are developed in a controlled environment, such as a laboratory, instead of being sourced from animals. It is encompassed by this invention that the cultivation method of the fat composition may be based to the well-known cultivation method in the art.

In yet another embodiment, the myoglobin composition is obtained by the combination of fermentation and/or cultivation processes.

A "recombinant protein" may mean a protein, or a polypeptide encoded by a recombinant DNA, and produced by an expression system (or expression host or a microorganism), wherein said DNA is not endogenous or native for said expression system. DNA regulatory regions as promoters may also be non native for the expression system. Alternatively DNA regulatory regions such as promoters may be native for said expression system. In other words, the expression system has been transformed, introducing exogenous or foreign DNA into it. This expression system hence formed expresses said recombinant DNA that will be translated into a corresponding recombinant protein, during a production process such as a microbial fermentation process and/or cultivation process.

In an embodiment, the microorganism used in the fermentation may be a bacterium, a yeast, a filamentous fungus or a cultured mammalian cell line, preferably *Pichia pastoris (Komagataella phaffi), Hansenula polymorpha, Escherichia coli,* or *Saccharomyces cerevisiae.* Most preferably, the microorganism used in the fermentation may be *Pichia pastoris.* In this context, single, enriched, cultured mammalian cells may be considered as microorganisms. In a further embodiment, the microorganism may be a bacterium, a yeast or a filamentous fungus. The microorganisms in the context of this invention are useful for the production of a myoglobin. Accordingly, in a further aspect, the invention provides a method for the production of a myoglobin as defined herein, comprising culturing the microorganisms in a suitable medium and optionally recovering the microorganism and/or myoglobin. Optionally, the produced myoglobin does not comprise a signal peptide as defined elsewhere herein.

A microorganism used in the microbial fermentation may be a prokaryote, a eukaryote or a filamentous fungus. A prokaryote may be a bacterium. The bacterium may be a Gram positive/Gram negative bacterium slected from the following list: *Absidia, Achromobacter, Acinetobacter, Aeribacillus, Aneurinibacillus, Agrobacterium, Aeromonas, Alcaligenes, Arthrobacter, Arzoarcus, Azomonas, Azospirillum, Azotobacter, Bacillus, Beijerinckia, Bradyrhizobium, Brevibacills, Burkholderia, Byssochlamys, Citrobacter, Clostridium, Comamonas, Cupriavidus, Corynebacterium, Deinococcus, Escherichia, Enterobacter, Flavobacterium, Fusobacterium, Gossypium, Klebsiella, Lactobacillus, Listeria, Megasphaera, Micrococcus, Mycobacterium, Norcadia, Porphyromonas, Propionibacterium, Pseudomonas, Ralstonia, Rhizobium, Rhodopseudomonas, Rhodospirillum, Rodococcus, Roseburia, Shewanella, Streptomycetes, Xanthomonas, Xylella, Yersinia, Treponema, Vibrio, Streptococcus, Lactococcus, Zymomonas, Staphylococcus, Salmonella, Sphingomonas, Sphingobium, Novosphingobium, Brucella* and *Microscilla.* Preferred bacteria include *Aeribacillus pallidus, Aneurinibacillus terranovensis, Bacillus subtilis, Bacillus amyloliquefaciens, Bacillus coagulans, Bacillus licheniformis, Bacillus megaterium, Bacillus halodurans, Bacillus pumilus, Brevibacillus thermoruber, Brevibacillus panacihumi, Cupriavidus basilensis, G. Iraustophilus, Gluconobacter oxydans, Caulobacter crescentus CB 15, Methylobacterium extorquens, Rhodobacter sphaeroides, Pelotomaculum thermopropionicum, Pseudomonas zeaxanthinifaciens, Pseudomonas putida, Paracoccus denitrificans, Escherichia coli, Corynebacterium glutamicum, Staphylococcus carnosus, Streptomyces lividans, Sinorhizobium melioti, Sphingobium sp., Novosphingobium sp., Sphingomonas henshuiensis,* and *Rhizobium radiobacter.* A preferred bacterium is Escherichia coli. Preferred Escherichia coli strains include: 58, 679, WG1, DH5α, TG1, TOP10, K12, BL21, BL21 DE3, XL1-Blue, XL10-Gold, TB1, REG-12, W945, HB101, DH1, DP50, AB284, JC9387, AG1, C600, Cavalli Hfr, Y10.

The microbial fermentation comprises culturing the microorganisms in a suitable medium and optionally recovering the microorganism and/or the myoglobin, or recombinant myoglobin. Optionally, the produced myoglobin or recombinant myoglobin does not comprise a signal peptide as defined elsewhere herein. In an embodiment, the recovered myoglobin or recombinant myoglobin is purified. Preferably, the purified myoglobin or recombinant myoglobin has a purity of at least 10%, 15%, 20%, more preferably has a purity of at least 25%, 30%, 35%, 40%, 45%, 50%, 55%, 60%, 65%, 70%, 75%, 80%, 85%, 90%, 95%, 96%, 97%, 98%, 99%, most preferably has a purity of 100%.

In an embodiment, the encoded or expressed recombinant myoglobin is derived from steppe mammoth myoglobin (SEQ ID NO: 1). In an embodiment, the recombinant myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 1. A nucleic acid encoding said recombinant myoglobin which is derived from steppe mammoth myoglobin (SEQ ID NO:1) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:15.

In an embodiment, the encoded or expressed recombinant myoglobin is derived from woolly mammoth myoglobin (SEQ ID NO: 2). In an embodiment, the recombinant myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 2. A nucleic acid encoding said recombinant myoglobin which is derived from woolly mammoth myoglobin (SEQ ID NO: 2) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:16.

In an embodiment, the encoded or expressed recombinant myoglobin is derived from pig myoglobin (SEQ ID NO: 3). In an embodiment, the recombinant myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 3. A nucleic acid encoding said recombinant myoglobin which is derived from pig myoglobin (SEQ ID NO: 3) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:17.

In an embodiment, the encoded or expressed recombinant myoglobin is derived from sheep myoglobin (SEQ ID NO: 4). In an embodiment, the recombinant myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 4. A nucleic acid encoding said recombinant myoglobin which is derived from Sheep myoglobin (SEQ ID NO: 4) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:18.

In an embodiment, the encoded or expressed recombinant myoglobin is derived from cow myoglobin (SEQ ID NO: 5). In an embodiment, the recombinant myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 5. A nucleic acid encoding said recombinant myoglobin which is derived from cow myoglobin (SEQ ID NO: 5) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:19.

In an embodiment, the encoded or expressed recombinant myoglobin is derived from chicken myoglobin (SEQ ID NO: 6). In an embodiment, the recombinant myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 6. A nucleic acid encoding said recombinant myoglobin which is derived from chicken myoglobin (SEQ ID NO: 6) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:20.

In an embodiment, the encoded or expressed recombinant myoglobin is derived from rabbit myoglobin (SEQ ID NO: 7). In an embodiment, the recombinant myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 7. A nucleic acid encoding said recombinant myoglobin which is derived from rabbit myoglobin (SEQ ID NO: 7) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:21.

In an embodiment, the encoded or expressed recombinant myoglobin is derived from bovine myoglobin (SEQ ID NO: 8). In an embodiment, the recombinant myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 8. A nucleic acid encoding said recombinant myoglobin which is derived from bovine myoglobin (SEQ ID NO: 8) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:22.

In an embodiment, the encoded or expressed recombinant myoglobin is derived from mouse myoglobin (SEQ ID NO: 9). In an embodiment, the recombinant myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 9. A nucleic acid encoding said recombinant myoglobin which is derived from mouse myoglobin (SEQ ID NO: 9) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:23.

In an embodiment, the encoded or expressed recombinant myoglobin is derived from rat myoglobin (SEQ ID NO: 10). In an embodiment, the recombinant myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 10. A nucleic acid encoding said recombinant myoglobin which is derived from rat myoglobin (SEQ ID NO: 10) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:24.

In an embodiment, the encoded or expressed recombinant myoglobin is derived from tuna myoglobin (SEQ ID NO: 11). In an embodiment, the recombinant myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 11. A nucleic acid encoding said recombinant myoglobin which is derived from tuna myoglobin (SEQ ID NO: 11) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:25.

In an embodiment, the encoded or expressed recombinant myoglobin is derived from salmon myoglobin (SEQ ID NO: 12). In an embodiment, the recombinant myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 12. A nucleic acid encoding said recombinant myoglobin which is derived from salmon myoglobin (SEQ ID NO: 12) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:26.

In an embodiment, the encoded or expressed recombinant myoglobin is derived from blue bonito myoglobin (SEQ ID NO: 13). In an embodiment, the recombinant myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 13. A nucleic acid encoding said recombinant myoglobin which is derived from blue bonito myoglobin (SEQ ID NO: 13) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:27.

In an embodiment, the encoded or expressed recombinant myoglobin is derived from sword fish myoglobin (SEQ ID NO: 14). In an embodiment, the recombinant myoglobin comprises a sequence that has at least has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity or similarity with SEQ ID NO: 14. A nucleic acid encoding said recombinant myoglobin which is derived from sword fish myoglobin (SEQ ID NO: 14) may have a sequence that has at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% identity with SEQ ID NO:28.

Cell culturing during the microbial fermentation may be performed for a duration of 14, 13.5, 13, 12.5, 12, 11.5, 11, 10.5, 10, 9.5, 9, 8.5, 8, 7.5, 7, 6.5, 6, 5.5, 5, 4.5, 4, 3.5, 3, 2.5, 2, 1.5 or 1 days, wherein said duration may deviate by 20%. Preferably, cell culturing is performed for a duration of 14, 13.5, 13, 12.5, 12, 11.5, 11, 10.5, 10, 9.5, 9, 8.5, 8, 7.5, 7, 6.5, 6, 5.5, 5, 4.5, 4, 3.5, 3, 2.5, 2, 1.5 or 1 days, wherein said duration may deviate by 10%. More preferably, the cell culturing is performed for 5 days, wherein said duration may deviate by 20%, most preferably by 10%.

The cell culturing will typically result in a production of at least 100 mg/L, 200 mg/L, 300 mg/L, 400 mg/L, 500 mg/L, 600 mg/L, 700 mg/L, 800 mg/L, 900 mg/L, 1 g/L, 2 g/L, 3 g/L, 4 g/L, 5 g/L, 6 g/L, 7 g/L, 8 g/L, 9 g/L, 10 g/L, 11 g/L, 12 g/L, 13 g/L, 14 g/L, 15 g/L, 16 g/L, 17 g/L,18 g/L, 19 g/L, 20 g/L, 21 g/L, 22 g/L, 23 g/L, 24 g/L, 25 g/L, 50 g/L, 75 g/L, 100 g/L, 200 g/L or 300 g/L of a myoglobin, or recombinant myoglobin.

The cell culturing will typically result in at least 10%, 20%, 25%, 30%, 35%, 40%, 45%, 50%, 55%, 60%, 65%, 70%, 75%, 80%, 85%, 90%, 95%, or 100%, preferably at least 20%, more preferably at least 40%, most preferably at least 60% of the carbon source in the growth medium being converted to a myoglobin or recombinant myoglobin.

Cell culturing may be performed for a duration of 14, 13.5, 13, 12.5, 12, 11.5, 11, 10.5, 10, 9.5, 9, 8.5, 8, 7.5, 7, 6.5, 6, 5.5, 5, 4.5, 4, 3.5, 3, 2.5, 2, 1.5 or 1 days, wherein said duration may deviate by 20%. Preferably, cell culturing is performed for a duration of 14, 13.5, 13, 12.5, 12, 11.5, 11, 10.5, 10, 9.5, 9, 8.5, 8, 7.5, 7, 6.5, 6, 5.5, 5, 4.5, 4, 3.5, 3, 2.5, 2, 1.5 or 1 days, wherein said duration may deviate by 10%. More preferably, the cell culturing is performed for 5 days, wherein said duration may deviate by 20%, most preferably by 10%.

The cell culturing will typically result in a production of at least 100 mg/L, 200 mg/L, 300 mg/L, 400 mg/L, 500 mg/L, 600 mg/L, 700 mg/L, 800 mg/L, 900 mg/L, 1 g/L, 2 g/L, 3 g/L, 4 g/L, 5 g/L, 6 g/L, 7 g/L, 8 g/L, 9 g/L, 10 g/L, 11 g/L, 12 g/L, 13 g/L, 14 g/L, 15 g/L, 16 g/L, 17 g/L, 18 g/L, 19 g/L, 20 g/L, 21 g/L, 22 g/L, 23 g/L, 24 g/L, 25 g/L, 50 g/L, 75 g/L, 100 g/L, 200 g/L or 300 g/L of a myoglobin.

The cell culturing will typically result in at least 10%, 20%, 25%, 30%, 35%, 40%, 45%, 50%, 55%, 60%, 65%, 70%, 75%, 80%, 85%, 90%, 95%, or 100%, preferably at least 20%, more preferably at least 40%, most preferably at least 60% of the carbon source in the growth medium being converted to a myoglobin.

Cell culturing may also be performed by implementation of a multiple step, preferably a two-step, culture method. For example, a production step of a myoglobin may be preceded by a cellular biomass growth step, wherein only limited production or no production is taking place. The different steps may be carried out using different culture modes and/or different growth media and/or different culture process parameter values, depending on the goal of each step and/or the cultured cell. The biomass during the production step may or may not be actively growing.

The host cells and/or myoglobin may optionally be recovered from the culture medium. When present intracellularly, the myoglobin may optionally be recovered from the recovered cellular biomass. Optionally, the recovered myoglobin is purified. Preferably, purification of the myoglobin will result in a purity of at least 10%, 15%, 20%, more preferably at least 25%, 30%, 35%, 40%, 45%, 50%, 55%, 65%, 70%, 75%, 80%, 85%, 86%, 87%, 88%, 89%, 90%, 91%, 92%, 93%, 94%, 95%, 96%, 97%, 98%, 99%, most preferably in a myoglobin that is substantially pure.

In an embodiment, the myoglobin is produced extracellularly, preferably by a host cell. In an embodiment, the myoglobin is extracellularly secreted from the microbial host, and/or wherein the myoglobin is recombinant myoglobin. In an embodiment, the microorganism produces the myoglobin or recombinant myoglobin extracellularly during the microbial fermentation. The myoglobin or recombinant myoglobin is transported out of the host cell after it is synthesized in the host cell, or the host microbial cell, or the host microorganism. In this context, the secretory fermentation activity of the host cell, preferably wherein the myoglobin is produced and/or secreted into an extracellular environment, is considered to be an extracellular production. Without being bound to this theory, an extracellular production process has the advantage that the downstream processing to recover the produced myoglobin or recombinant myoglobin is more convenient, efficient and/or effective. Furthermore, an extracellular production process may result in a composition comprising the recombinant myoglobin with a high purity such as at least 60%, 65%, 70%, 75%, 80%, 85%, 90%, 95%, 96%, 97%, 98%, or 99% with minimal or less downstream processing compared to intracellular methods wherein the myoglobin or recombinant myoglobin is not transported out of the host cell after its synthesis. The relevant downstream processing technology that may be suitable for recovery and/or purification will depend on whether the myoglobin or recombinant myoglobin is accumulated within the cultured cells or excreted. Said processing technology and the associated choice will be known to the skilled person. Purity may be measured as the weight percentage of the total protein fraction in the cell-free supernatant obtained at the end of a process or extracellular process according to the invention. Without being bound to this theory, an extracellular production process has the advantage that the optional step of recovering myoglobin does not comprise lysing the host cell. As a result, the extracellular process may result in a composition having a low concentration of nucleic acids originating from the host cell. In an embodiment, the recovered myoglobin or recovered recombinant myoglobin is purified. Preferably, the purified myoglobin or purified recombinant myoglobin has a purity of at least 10%, 15%, 20%, more preferably has a purity of at least 25%, 30%, 35%, 40%, 45%, 50%, 55%, 65%, 70%, 75%, 80%, 85%, 86%, 87%, 88%, 89%, 90%, 91%, 92%, 93%, 94%, 95%, 96%, 97%, 98%, 99%, most preferably has a purity of 100%.

The relevant downstream processing technology that may be suitable for recovery and/or purification will depend on whether the myoglobin is accumulated within the cultured cells or excreted. Said processing technology and the associated choice will be known to the skilled person and is discussed, for example, in Wesselingh, J.A and Krijgsman, J., 1st edition, Downstream Processing in Biotechnology, Delft Academic Press, NL, 2013. In a recovery process, the biomass may be recovered from the culture medium using e.g. centrifugation or filtration. If the produced myoglobin is accumulated within the cells, it can then be recovered and/or purified from the biomass. If it is excreted, it can be recovered from the cell-free medium or, if the biomass separation step is skipped, directly from the culture broth. Recovery and/or purification may be performed according to any conventional recovery or purification methodology known in the art. Methods for recovery and/or purification of proteins are known to the skilled person and are discussed in standard handbooks, such as Sambrook and Russel, Molecular Cloning: A Laboratory Manual, 3rd edition, Cold Spring Harbor Laboratory, Cold Spring Harbor Laboratory Press, NY, 2001 or Ausubel F. et al, eds., Current protocols in molecular biology, Green Publishing and Wiley Interscience, NY, 2003. Examples of widely used recovery and/or purification methods include chromatographic methods such as gel-filtration chromatography, ion-exchange chromatography, immunoaffinity chromatography, metal affinity chromatography, gel-filtration chromatography, fractionation with precipitants such as ammonium sulfate and polyethylene glycol, gel electrophoresis and salting out and dialysis. Preferably, metal affinity chromatography or size-exclusion chromatography is used. Recovery and/or purification may optionally be enhanced by linking the enzyme polypeptide to a sequence that facilitates purification, such as with a GST domain, using well-known molecular toolbox techniques. Optionally, the sequence that facilitates purification and/or signal peptide that facilitates excretion of the myoglobin is removed from the final product using techniques known in the art, for example proteolysis by endopeptidases targeting a linker between the sequence that facilitates purification and/or the signal peptide and the myoglobin. In some embodiments, the enzyme polypeptide is linked (fused) to a hexa-histidine peptide, such as the tag provided in a pET23a(+) vector (Genescript Biotech, Leiden, The Netherlands), among others, many of which are commercially available. As, for example, described in Gentz et al., Proc. Natl. Acad. Sci. USA 86:821-824 (1989), hexa-histidine peptide provides for convenient purification of the fusion protein.

In an embodiment, preferably at the end of fermentation, the myoglobin (referred to as a target protein in this invention) may remain suspended in the fermentation broth and undergo a production process comprising at least a downstream processing step, such as separation and purification, to achieve a final product, which is the myoglobin composition, with increasing levels of purity and concentration of myoglobin. The initial step in the downstream processing may involve biomass removal through solid-liquid separation, where microbial cells and other insoluble components are separated from the broth, for instance by centrifugation and/or filtration, preferably by centrifugation. At the end of this step, the cell-free suspension (supernatant) is collected. If cell debris, colloids or other host cell impurities remain present, additional purification steps, such as microfiltration or dead-end filtration, may be required to remove them. To enhance the purity and concentration of the protein of interest, ultrafiltration with semi-permeable membranes may be used to separate proteins, based on molecular weight and size. The target protein, which is for instance myoglobin in this invention, is retained in the retentate stream, while smaller molecules and impurities pass through the membrane into the permeate stream. The final protein solution, which for instance is the myoglobin composition in this invention, typically undergoes a sterile filtration step as a bio-burden reduction measure to prevent microbial contamination and ensure the product's safety and stability. This is commonly achieved using particle reduction filters or sterilizing-grade membrane filters. A final step involves preparing the purified product, which for instance is the myoglobin composition in this invention, for its intended applications, ensuring it is in a stable form suitable for storage, handling, and transportation. The product, which for instance is the myoglobin composition in this invention, can be stored as a liquid with optionally a preservative added. In another embodiment, it is also possible to freeze the final product, which for instance is the myoglobin composition in this invention. In yet another embodiment, it is possible to produce a dry formulation of the protein, which for instance is the myoglobin composition in this invention. This is typically achieved through processes such as spray drying, lyophilization, and/or crystallization.

In an embodiment, the myoglobin composition is obtained via recovering and/or purifying from the culture medium. This may be realized continuously with the production process or subsequently to it. In a preferred embodiment, the myoglobin composition is obtained via recovering and/or purifying from the cultured cells. A filter may be used for the purification of the recovered myoglobin. This may be realized continuously with the production process, by harvesting fractions of growing cells, or subsequently to it.

In some embodiments, the flavoured meat substitute according to the present invention comprises at least part of the fermentation broth or part of the microbial host.

In an embodiment, the myoglobin composition is sterilized, shredded, spray dried, freeze dried, blended, shaped, cubed, dosed or packed. Sterilization refers to any process that removes, kills, or deactivates all forms of life (particularly microorganisms such as fungi, bacteria, spores, and unicellular eukaryotic organisms) and other biological agents such as prions present in or on a specific surface, object, or fluid. Sterilization can be achieved through various means, including heat, chemicals, irradiation, high pressure, and filtration. Freeze drying, also known as lyophilization or cryodesiccation, is a low temperature dehydration process that involves freezing the product, lowering pressure, then removing the ice by sublimation. Packing aims to provide a protection for the product, to tamper resistance and to provide physical, chemical or biological needs. Packing may also contain nutrition facts, characteristics of the products, and an instruction/guide for use of the product.

In an embodiment, the cultured host cells used in fermentation are immobilized. Immobilization of cells may be achieved by any means known to the skilled person as discussed in standard handbooks such as Guisan, J.M., Bolivar, J.M., López-Gallego, F., Rocha-Martin, J. (Eds.), Immobilization of Enzymes and Cells: Methods and Protocols, Springer US, USA, 2020. Typically, the host cells can be immobilized to a semi-solid or solid support by three different methods. The first method involves polymerizing or solidifying a spore- or cell-containing solution. Examples of polymerizable or solidifiable solutions include alginate, A-carrageenan, chitosan, polyacrylamide, polyacrylamide-hydrazide, agarose, polypropylene, polyethylene glycol, dimethyl acrylate, polystyrene divinyle benzene, polyvinyl benzene, polyvinyl alcohol, epoxy carrier, cellulose, cellulose acetate, photocrosslinkable resin, prepolymers, urethane, and gelatin. The second method involves cell adsorption onto a support. Examples of such supports include bone char, cork, clay, resin, sand porous alumina beads, porous brick, porous silica, celite, or wood chips. The host cells can colonize the support and form a biofilm. The third method involves the covalent coupling of the host cells to a support using chemical agents like glutaraldehyde, o-dianisidine (U.S. Pat. No. 3,983,000), polymeric isocyanates (U.S. Pat. No. 4,071,409), silanes (U.S. Pat. Nos. 3,519,538 and 3,652,761), hydroxyethyl acrylate, transition metal-activated supports, cyanuric chloride, sodium periodate, toluene, and the like. Cultured host cells can be immobilized in any phase of their growth, for example after a desired cell density in the culture has been reached. Suitable culture modes and/or different culture process parameter values will be known to the skilled person and are discussed in standard handbooks, such as Colin R. Phillips C.R., Poon Y. C., Immobilization of Cells: In Biotechnology Monographs book series (Biotechnology, volume 5), Springer, Berlin, Germany, 1988; Tampion J., Tampion M. D., Immobilized Cells: Principles and Applications, Cambridge University Press, UK, 1987. Preferably, immobilized cells are cultured in packed bed bioreactors, also known as plug-flow bioreactors, or expanded (fluidized) bed bioreactors. Suitable growth media and recovery and/or purification methods are further discussed elsewhere herein.

The microorganisms used in fermentation to obtain a myoglobin or a recombinant myoglobin, the recovering step and/or purification step as described in the first aspect of the present invention also applies in this second aspect of the invention. In an embodiment, the microorganism is a bacterium, a yeast, or a filamentous fungus, preferably *Pichia pastoris, Hansenula polymorpha, Escherichia coli,* or *Saccharomyces cerevisiae* More preferably, the microorganism used in the fermentation may be *Pichia pastoris.*

In all aspects of this invention, there is provided a meat substitute obtainable by a method of any one of the method described herein in the invention.

### A pet food

In another aspect of this invention, there is provided a pet food obtainable by the methods described herein. The pet food according to this aspect comprises a myoglobin, wherein the myoglobin is a steppe mammoth myoglobin, woolly mammoth myoglobin, pig myoglobin, sheep myoglobin, cow myoglobin, chicken myoglobin, rabbit myoglobin, bovine myoglobin, mouse myoglobin, rat myoglobin, tuna myoglobin, salmon myoglobin, blue bonito myoglobin, or sword fish myoglobin or a myoglobin derived from any of these myoglobins.

All preferences and embodiments listed for the methods for preparing a pet food of the earlier aspect of the invention may be applied mutatis mutandis to the pet food of the this aspect of the invention. For example, any specification of the sequence of the myoglobin added during the method may be applied to the sequence of a myoglobin comprised in the pet food of this aspect. This is evident as the pet food of this aspect is obtainable by the method of the earlier aspects.

In an embodiment, the pet food, which is preferably a meat substitute, does not comprise a symbiotic hemoglobin which has been produced by a bacterium living in symbiosis in the root nodules of a soy plant. In an embodiment, the pet food, which is preferably a meat substitute, does not comprise a leghemoglobin. In an embodiment, the myoglobin added during the method of the invention may be the sole source of heme-containing protein present in the flavoured meat substitute. It means the flavoured meat substitute may comprise other proteins than the added myoglobin as disclosed herein. Examples of proteins that may be present include soy proteins.

Within the context of the invention, a heme-containing protein as defined can refer to all proteins or protein subunits that are capable of covalently or noncovalently binding a heme moiety. Heme-containing polypeptides can transport or store oxygen. Some examples of heme-containing protein include globin, hemoglobin, leghemoglobin.

In an embodiment, the pet food, which is preferably a meat substitute, is prepared by mixing (i.e. adding) from 10% up to 40% of a protein source, from 5% up to 30% of a lipid source, from 0.1% up to 5% of NaCl, from 0.1% up to 5% of a fiber source, and from 0.1% up to 5% of a myoglobin. In a more preferred embodiment, the pet food, which is preferably a meat substitute, is prepared by mixing from 20% up to 30% of a protein source, from 10% up to 20% of a lipid source, from 0.5% up to 2% of NaCl, from 0.5% up to 1.5% of a fiber source, and from 0.1% up to 3% of a myoglobin.

In an embodiment, the pet food, which is preferably a meat substitute, comprises a similar amount of bioavailable iron or heme iron as the counterpart genuine meat. In an embodiment such amount is ranged from 0.3 to 20 mg bioavailable iron or heme iron per 100 gram pet food. In an embodiment such amount is ranged from 0.1 mg up to 16.5 mg, 16.17 mg, 15.84 mg, 15.51 mg, 15.18 mg, 14.85 mg, 14.52 mg, 14.19 mg, 13.86 mg, 13.53 mg, 13.2 mg, 12.87 mg, 12.54 mg, 12.21 mg, 11.88 mg, 11.55 mg, 11.22 mg, 10.89 mg, 10.56 mg, 10.23 mg, 9.9 mg, 9.735 mg, 9.57 mg, 9.405 mg, 9.24 mg, 9.075 mg, 8.91 mg, 8.745 mg, 8.58 mg, 8.415 mg, 8.25 mg, 8.085 mg, 7.92 mg, 7.755 mg, 7.59 mg, 7.425 mg, 7.26 mg, 7.095 mg, 6.93 mg, 6.765 mg, 6.6 mg, 6.435 mg, 6.27 mg, 6.105 mg, 5.94 mg, 5.775 mg, 5.61 mg, 5.445 mg, 5.28 mg, 5.115 mg, 4.95 mg, 4.785 mg, 4.62 mg, 4.455 mg, 4.29 mg, 4.125 mg, 3.96 mg, 3.795 mg, 3.63 mg, 3.465 mg, 3.3 mg, 3.135 mg, 2.97 mg, 2.805 mg, 2.64 mg, 2.475 mg, 2.31 mg, 2.145 mg, 1.98 mg, 1.815 mg or 1.65 mg bioavailable iron or heme iron per 100 gram pet food. In another embodiment such amount is 0.3, 0.4, 0.5, 0.6, 0.7, 0.8, 0.9, 1, 1.1, 1.2, 1.3, 1.4, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, 5, 5.1, 5.2, 5.3, 5.4, 5.5, 5.6, 5.7, 5.8, 5.9, 6, 6.1, 6.2, 6.3, 6.4, 6.5, 6.6, 6.7, 6.8, 6.9, 7, 7.1, 7.2, 7.3, 7.4, 7.5, 7.6, 7.7, 7.8, 7.9, 8, 8.1, 8.2, 8.3, 8.4, 8.5, 8.6, 8.7, 8.8, 8.9, 9, 9.1, 9.2, 9.3, 9.4, 9.5, 9.6, 9.7, 9.8, 9.9, 10, 10.1, 10.2, 10.3, 10.4, 10.5, 10.6, 10.7, 10.8, 10.9, 11, 11.1, 11.2, 11.3, 11.4, 11.5, 11.6, 11.7, 11.8, 11.9, 12, 12.1, 12.2, 12.3, 12.4, 12.5, 12.6, 12.7, 12.8, 12.9, 13, 13.1, 13.2, 13.3, 13.4, 13.5, 13.6, 13.7, 13.8, 13.9, 14, 14.1, 14.2, 14.3, 14.4, 14.5, 14.6, 14.7, 14.8, 14.9, 15, 15.1, 15.2, 15.3, 15.4, 15.5, 15.6, 15.7, 15.8, 15.9, 16, 16.1, 16.2, 16.3, 16.4, 16.5, 16.6, 16.7, 16.8, 16.9, 17, 17.1, 17.2, 17.3, 17.4, 17.5, 17.6, 17.7, 17.8, 17.9, 18, 18.1, 18.2, 18.3, 18.4, 18.5, 18.6, 18.7, 18.8, 18.9, 19, 19.1, 19.2, 19.3, 19.4, 19.5, 19.6, 19.7, 19.8, 19.9, or 20 mg bioavailable iron or heme iron per 100 gram pet food.

### General terms

Unless stated otherwise, all technical and scientific terms used herein have the same meaning as customarily and ordinarily understood by a person of ordinary skill in the art to which this invention belongs, and read in view of this disclosure.

In this document and in its claims, the verb "to comprise" and its conjugations is used in its nonlimiting sense to mean that items following the word are included, but items not specifically mentioned are not excluded. In addition, the verb "to consist" may be replaced by "to consist essentially of' meaning that a method as described herein may comprise additional step(s) than the ones specifically identified, said additional step(s) not altering the unique characteristic of the invention. In addition, the verb "to consist" may be replaced by "to consist essentially of" meaning that a pet food, a meat substitute, a myoglobin composition, a gene construct, a host cell (or methods) as described herein may comprise additional component(s) (or additional steps) than the ones specifically identified, said additional component(s) not altering the unique characteristic of the invention.

Reference to an element by the indefinite article "a" or "an" does not exclude the possibility that more than one of the elements is present, unless the context clearly requires that there be one and only one of the elements. The indefinite article "a" or "an" thus usually means "at least one". As used herein, with "at least" a particular value means that particular value or more. For example, "at least 2" is understood to be the same as "2 or more" i.e., 2, 3, 4, 5, 6, 7, 8, 9, 10, 11, 12, 13, 14, 15, ..., etc.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. The word "about" or "approximately" when used in association with a numerical value (e.g. about 10) preferably means that the value may be the given value (of 10) more or less 0.1% of the value. As used herein, the term "and/or" indicates that one or more of the stated cases may occur, alone or in combination with at least one of the stated cases, up to with all of the stated cases.

In the context of this application, all percentages in the context of a concentration or composition referto weight percentages, unless defined otherwise. In the context ofthis application, expressions such as "a parameter having a value of at least X, Y or Z" should be interpreted as said parameter having a value of at least X, of at least Y, or of at least Z.

Various embodiments are described herein. Each embodiment as identified herein may be combined together unless otherwise indicated. All patent applications, patents, and printed publications cited herein are incorporated herein by reference in the entireties, except for any definitions, subject matter disclaimers or disavowals, and except to the extent that the incorporated material is inconsistent with the express disclosure herein, in which case the language in this disclosure controls. One skilled in the art will recognize many methods and materials similar or equivalent to those described herein, which could be used in the practice of the present invention. Indeed, the present invention is in no way limited to the methods and materials described. The present invention is further described by the following examples which should not be construed as limiting the scope of the invention.

The word "about" when used in association with an integer (about 10) preferably means that the value may be the given value of 10 more or less 1 of the value: about 10 preferably means from 9 to 11. The word "about" when used in association with a numerical value (about 10.6) preferably means that the value may be the given value of 10.6 more or less 0.1 of the value 10.6: about 10.6 preferably means from 10.5 to 10.7. The word "about" when used in association with a numerical value (about 10.65) preferably means that the value may be the given value of 10.65 more or less 0.01 of the value 10.65: about 10.65 preferably means from 10.64 to 10.66. Notwithstanding, the skilled person knows that numerical values relating to measurements are subject to measurement errors which place limits on their accuracy. For this reason, the general convention in the scientific and technical literature is applied: the last decimal place of a numerical value indicates its degree of accuracy. Where no other error margins are given, the maximum margin is ascertained by applying the rounding-off convention to the last decimal place, e.g. for a measurement of 3.5 cm, the error margin is 3.45-3.54. When interpreting ranges of values in patent specifications, the skilled person proceeds on the same basis.

### Sequence identity

In the context of the invention, a nucleic acid molecule such as a nucleic acid molecule encoding a myoglobin is represented by a nucleic acid or nucleotide sequence which encodes a protein fragment or a polypeptide or a peptide or a derived peptide. It is to be understood that each nucleic acid molecule or protein fragment or polypeptide or peptide or derived peptide or construct as identified herein by a given sequence identity number (SEQ ID NO) is not limited to this specific sequence as disclosed. Each coding sequence as identified herein encodes a given protein fragment or polypeptide or peptide or derived peptide or construct or is itself a protein fragment or polypeptide or construct or peptide or derived peptide.

Throughout this application, each time one refers to a specific nucleotide sequence SEQ ID NO (take SEQ ID NO: X as example) encoding a given protein fragment or polypeptide or peptide or derived peptide, one may replace it by:
i. a nucleotide sequence comprising a nucleotide sequence that has at least 60% sequence identity with SEQ ID NO: X; or
ii. a nucleotide sequence the sequence of which differs from the sequence of a nucleic acid molecule of (i) due to the degeneracy of the genetic code; or
iii. a nucleotide sequence that encodes an amino acid sequence that has at least 60% amino acid identity or similarity with an amino acid sequence encoded by a nucleotide sequence SEQ ID NO: X.

Another preferred level of sequence identity or similarity is 70%. Another preferred level of sequence identity or similarity is 75%. Another preferred level of sequence identity or similarity is 80%. Another preferred level of sequence identity or similarity is 85%. Another preferred level of sequence identity or similarity is 90%. Another preferred level of sequence identity or similarity is 95%. Another preferred level of sequence identity or similarity is 99%.

Throughout this application, each time one refers to a specific amino acid sequence SEQ ID NO (take SEQ ID NO: Y as example), one may replace it by: a polypeptide represented by an amino acid sequence comprising a sequence that has at least 60% sequence identity or similarity with amino acid sequence SEQ ID NO: Y. Another preferred level of sequence identity or similarity is 70%. Another preferred level of sequence identity or similarity is 75%. Another preferred level of sequence identity or similarity is 80%. Another preferred level of sequence identity or similarity is 85%. Another preferred level of sequence identity or similarity is 90%. Another preferred level of sequence identity or similarity is 95%. Another preferred level of sequence identity or similarity is 99%.

Each nucleotide sequence or amino acid sequence described herein by virtue of its identity or similarity percentage with a given nucleotide sequence or amino acid sequence respectively has in a further preferred embodiment an identity or a similarity of at least 60%, at least 61%, at least 62%, at least 63%, at least 64%, at least 65%, at least 66%, at least 67%, at least 68%, at least 69%, at least 70%, at least 71%, at least 72%, at least 73%, at least 74%, at least 75%, at least 76%, at least 77%, at least 78%, at least 79%, at least 80%, at least 81%, at least 82%, at least 83%, at least 84%, at least 85%, at least 86%, at least 87%, at least 88%, at least 89%, at least 90%, at least 91%, at least 92%, at least 93%, at least 94%, at least 95%, at least 96%, at least 97%, at least 98%, at least 99% or 100% with the given nucleotide or amino acid sequence, respectively. The terms "homology", "sequence identity" and the like are used interchangeably herein. Sequence identity is described herein as a relationship between two or more amino acid (polypeptide or protein) sequences or two or more nucleic acid (polynucleotide) sequences, as determined by comparing the sequences. In a preferred embodiment, sequence identity is calculated based on the full length of two given SEQ ID NO's or on a part thereof. Part thereof preferably means at least 50%, 60%, 70%, 80%, 90%, or 100% of both SEQ ID NO's. In the art, "identity" also refers to the degree of sequence relatedness between amino acid or nucleic acid sequences, as the case may be, as determined by the match between strings of such sequences. "Similarity" between two amino acid sequences is determined by comparing the amino acid sequence and its conserved amino acid substitutes of one polypeptide to the sequence of a second polypeptide. "Identity" and "similarity" can be readily calculated by known methods, including but not limited to those described in Bioinformatics and the Cell: Modern Computational Approaches in Genomics, Proteomics and transcriptomics, Xia X., Springer International Publishing, New York, 2018; and Bioinformatics: Sequence and Genome Analysis, Mount D., Cold Spring Harbor Laboratory Press, New York, 2004, each incorporated herein by reference.

"Sequence identity" and "sequence similarity" can be determined by alignment of two peptide or two nucleotide sequences using global or local alignment algorithms, depending on the length of the two sequences. Sequences of similar lengths are preferably aligned using a global alignment algorithms (e.g. Needleman-Wunsch) which aligns the sequences optimally over the entire length, while sequences of substantially different lengths are preferably aligned using a local alignment algorithm (e.g. Smith-Waterman). Sequences may then be referred to as "substantially identical" or "essentially similar" when they (when optimally aligned by for example the program EMBOSS needle or EMBOSS water using default parameters) share at least a certain minimal percentage of sequence identity (as described below).

A global alignment is suitably used to determine sequence identity when the two sequences have similar lengths. When sequences have a substantially different overall length, local alignments, such as those using the Smith-Waterman algorithm, are preferred. EMBOSS needle uses the Needleman-Wunsch global alignment algorithm to align two sequences over their entire length (full length), maximizing the number of matches and minimizing the number of gaps. EMBOSS water uses the Smith-Waterman local alignment algorithm. Generally, the EMBOSS needle and EMBOSS water default parameters are used, with a gap open penalty = 10 (nucleotide sequences) / 10 (proteins) and gap extension penalty = 0.5 (nucleotide sequences) / 0.5 (proteins). For nucleotide sequences the default scoring matrix used is DNAfull and for proteins the default scoring matrix is Blosum62 (Henikoff & Henikoff, 1992, PNAS 89, 915-919, incorporated herein by reference).

Alternatively, percentage similarity or identity may be determined by searching against public databases, using algorithms such as FASTA, BLAST, etc. Thus, the nucleic acid and protein sequences of some embodiments of the present invention can further be used as a "query sequence" to perform a search against public databases to, for example, identify other family members or related sequences. Such searches can be performed using the BLASTn and BLASTx programs (version 2.0) of Altschul, et al. (1990) J. Mol. Biol. 215:403-10, incorporated herein by reference. BLAST nucleotide searches can be performed with the NBLAST program, score = 100, wordlength = 12 to obtain nucleotide sequences homologous to oxidoreductase nucleic acid molecules of the invention. BLAST protein searches can be performed with the BLASTx program, score = 50, wordlength = 3 to obtain amino acid sequences homologous to protein molecules of the invention. To obtain gapped alignments for comparison purposes, Gapped BLAST can be utilized as described in Altschul et al., (1997) Nucleic Acids Res. 25(17): 3389-3402, incorporated herein by reference. When utilizing BLAST and Gapped BLAST programs, the default parameters of the respective programs (e.g., BLASTx and BLASTn) can be used. See the homepage of the National Center for Biotechnology Information accessible on the world wide web at www.ncbi.nlm.nih.gov/.

Optionally, in determining the degree of amino acid similarity, the skilled person may also take into account so-called conservative amino acid substitutions. As used herein, "conservative" amino acid substitutions refer to the interchangeability of residues having similar side chains. Examples of classes of amino acid residues for conservative substitutions are given in the Tables below.

| | |
|---|---|
| Acidic Residues | Asp (D) and Glu (E) |
| Basic Residues | Lys (K), Arg (R), and His (H) |
| Hydrophilic Uncharged Residues | Ser (S), Thr (T), Asn (N), and Gln (Q) |
| Aliphatic Uncharged Residues | Gly (G), Ala (A), Val (V), Leu (L), and Ile (I) |
| Non-polar Uncharged Residues | Cys (C), Met (M), and Pro (P) |
| Aromatic Residues | Phe (F), Tyr (Y), and Trp (W) |

Alternative conservative amino acid residue substitution classes:

| | | | |
|---|---|---|---|
| 1 | A | S | T |
| 2 | D | E | |
| 3 | N | Q | |
| 4 | R | K | |
| 5 | I | L | M |
| 6 | F | Y | W |

Alternative physical and functional classifications of amino acid residues:

| | |
|---|---|
| Alcohol group-containing residues | S and T |
| Aliphatic residues | I, L, V, and M |
| Cycloalkenyl-associated residues | F, H, W, and Y |
| Hydrophobic residues | A, C, F, G, H, I, L, M, R, T, V, W, and Y |
| Negatively charged residues | D and E |
| Polar residues | C, D, E, H, K, N, Q, R, S, and T |
| Positively charged residues | H, K, and R |
| Small residues | A, C, D, G, N, P, S, T, and V |

| | |
|---|---|
| Very small residues | A, G, and S |
| Residues involved in turn formation | A, C, D, E, G, H, K, N, Q, R, S, P and T |
| Flexible residues | Q, T, K, S, G, P, D, E, and R |

For example, a group of amino acids having aliphatic side chains is glycine, alanine, valine, leucine, and isoleucine; a group of amino acids having aliphatic-hydroxyl side chains is serine and threonine; a group of amino acids having amide-containing side chains is asparagine and glutamine; a group of amino acids having aromatic side chains is phenylalanine, tyrosine, and tryptophan; a group of amino acids having basic side chains is lysine, arginine, and histidine; and a group of amino acids having sulphur-containing side chains is cysteine and methionine. Preferred conservative amino acids substitution groups are: valine-leucine-isoleucine, phenylalanine-tyrosine, lysine-arginine, alanine-valine, and asparagine-glutamine. Substitutional variants of the amino acid sequence disclosed herein are those in which at least one residue in the disclosed sequences has been removed and a different residue inserted in its place. Preferably, the amino acid change is conservative. Preferred conservative substitutions for each of the naturally occurring amino acids are as follows: Ala to Ser; Arg to Lys; Asn to Gln or His; Asp to Glu; Cys to Ser or Ala; Gln to Asn; Glu to Asp; Gly to Pro; His to Asn or Gln; Ile to Leu or Val; Leu to Ile or Val; Lys to Arg; Gln or Glu; Met to Leu or Ile; Phe to Met, Leu or Tyr; Ser to Thr; Thr to Ser; Trp to Tyr; Tyr to Trp or Phe; and, Val to lie or Leu.

### Proteins and amino acids

The terms "protein" or "polypeptide" or "amino acid sequence" are used interchangeably and refer to molecules consisting of a chain of amino acids, without reference to a specific mode of action, size, 3-dimensional structure or origin. In amino acid sequences as described herein, amino acids or "residues" are denoted by three-letter symbols. These three-letter symbols as well as the corresponding one-letter symbols are well known to a person of skill in the art and have the following meaning: A (Ala) is alanine, C (Cys) is cysteine, D (Asp) is aspartic acid, E (Glu) is glutamic acid, F (Phe) is phenylalanine, G (Gly) is glycine, H (His) is histidine, I (Ile) is isoleucine, K (Lys) is lysine, L (Leu) is leucine, M (Met) is methionine, N (Asn) is asparagine, P (Pro) is proline, Q (Gln) is glutamine, R (Arg) is arginine, S (Ser) is serine, T (Thr) is threonine, V (Val) is valine, W (Trp) is tryptophan, Y (Tyr) is tyrosine. A residue may be any proteinogenic amino acid, but also any non-proteinogenic amino acid such as D-amino acids and modified amino acids formed by post-translational modifications, and also any non-natural amino acid, as described herein..

### Gene or coding sequence

The term "gene" means a DNA fragment comprising a region (transcribed region), which is transcribed into an RNA molecule (e.g. an mRNA) in a cell, operably linked to suitable regulatory regions (e.g. a promoter). A gene will usually comprise several operably linked fragments, such as a promoter, a 5' leader sequence, a coding region and a 3'-nontranslated sequence (3'-end) e.g. comprising a polyadenylation- and/or transcription termination site. "Expression of a gene" refers to the process wherein a DNA region which is operably linked to appropriate regulatory regions, particularly a promoter, is transcribed into an RNA, which is biologically active, i.e. which is capable of being translated into a biologically active protein or peptide. As used herein, a "regulator" or "transcriptional regulator" is a protein that controls the rate of transcription of genetic information from DNA to messenger RNA, by binding to a specific DNA sequence.

### Promoter

As used herein, the term "promoter" or "transcription regulatory sequence" refers to a nucleic acid fragment that functions to control the transcription of one or more coding sequences, and is located upstream with respect to the direction of transcription of the transcription initiation site of the coding sequence, and is structurally identified by the presence of a binding site for DNA-dependent RNA polymerase, transcription initiation sites and any other DNA sequences, including, but not limited to transcription factor binding sites, repressor and activator protein binding sites, and any other sequences of nucleotides known to one of skill in the art to act directly or indirectly to regulate the amount of transcription from the promoter. A "constitutive" promoter is a promoter that is active under most physiological and developmental conditions. An "inducible" and/or "repressible" promoter is a promoter that is physiologically or developmentally regulated to be induced and/or repressed, e.g. by the application of a chemical inducer or repressing signal.

As used herein, the term "operably linked" refers to a linkage of polynucleotide elements in a functional relationship. A nucleic acid is "operably linked" when it is placed into a functional relationship with another nucleic acid sequence. For instance, a transcription regulatory sequence is operably linked to a coding sequence if it affects the transcription of the coding sequence. Operably linked means that the DNA sequences being linked are typically contiguous and, where necessary to join two protein encoding regions, contiguous and in reading frame. Linking can be accomplished by ligation at convenient restriction sites or at adapters or linkers inserted in lieu thereof, or by gene synthesis.

### Gene constructs and expression vectors

Gene constructs as described herein could be prepared using any cloning and/or recombinant DNA techniques, as known to a person of skill in the art, in which a nucleotide sequence encoding said myoglobin is expressed in a suitable cell, e.g. cultured cells or cells of a multicellular organism, such as described in Ausubel et al., "Current Protocols in Molecular Biology", Greene Publishing and Wiley-Interscience, New York (1987) and in Sambrook and Russell (2001, *supra*); both of which are incorporated herein by reference in their entirety. Also see, Kunkel (1985) Proc. Natl. Acad. Sci. 82:488 (describing site directed mutagenesis) and Roberts et al. (1987) Nature 328:731-734 or Wells, J.A., et al. (1985) Gene 34: 315 (describing cassette mutagenesis).

The phrase "expression vector" or "vector" generally refers to a tool in molecular biology used to obtain gene expression in a cell, for example by introducing a nucleotide sequence that is capable of effecting expression of a gene or a coding sequence in a host compatible with such sequences. An expression vector carries a genome that is able to stabilize and remain episomal in a cell. Within the context of the invention, a cell may mean to encompass a cell used to make the construct or a cell wherein the construct will be administered. Alternatively, a vector is capable of integrating into a cell's genome, for example through homologous recombination or otherwise.

These expression vectors typically include at least suitable promoter sequences and optionally, transcription termination signals. An additional factor necessary or helpful in effecting expression can also be used as described herein. A nucleic acid or DNA or nucleotide sequence encoding a myoglobin is incorporated into a DNA construct capable of introduction into and expression in an *in vitro* cell culture. Specifically, a DNA construct is suitable for replication in a prokaryotic host, such as bacteria, *e.g., E. coli,* or can be introduced into a cultured mammalian, plant, insect, (*e.g*., Sf9), yeast, fungi or other eukaryotic cell lines.

A DNA construct prepared for introduction into a particular host may include a replication system recognized by the host, an intended DNA segment encoding a desired polypeptide, and transcriptional and translational initiation and termination regulatory sequences operably linked to the polypeptide-encoding segment. The term "operably linked" has already been described herein. For example, a promoter or enhancer is operably linked to a coding sequence if it stimulates the transcription of the sequence. DNA for a signal sequence is operably linked to DNA encoding a polypeptide if it is expressed as a preprotein that participates in the secretion of a polypeptide. Generally, a DNA sequence that is operably linked are contiguous, and, in the case of a signal sequence, both contiguous and in reading frame. However, enhancers need not be contiguous with a coding sequence whose transcription they control. Linking is accomplished by ligation at convenient restriction sites or at adapters or linkers inserted in lieu thereof, or by gene synthesis.

The selection of an appropriate promoter sequence generally depends upon the host cell selected for the expression of a DNA segment. Examples of suitable promoter sequences include prokaryotic, and eukaryotic promoters well known in the art (see, *e.g*. Sambrook and Russell, 2001, *supra*). A transcriptional regulatory sequence typically includes a heterologous enhancer or promoter that is recognised by the host. The selection of an appropriate promoter depends upon the host, but promoters such as the trp, lac and phage promoters, tRNA promoters and glycolytic enzyme promoters are known and available (see, *e.g*. Sambrook and Russell, 2001, *supra*). An expression vector includes the replication system and transcriptional and translational regulatory sequences together with the insertion site for the polypeptide encoding segment. In most cases, the replication system is only functional in the cell that is used to make the vector (bacterial cell as *E. Coli*). Most plasmids and vectors do not replicate in the cells infected with the vector. Examples of workable combinations of cell lines and expression vectors are described in Sambrook and Russell (2001, *supra*) and in Metzger et al. (1988) Nature 334: 31-36. For example, suitable expression vectors can be expressed in, yeast, *e.g. S. cerevisiae, e.g.,* insect cells, *e.g*., Sf9 cells, mammalian cells, *e.g*., CHO cells and bacterial cells, *e.g., E. coli.* A cell may thus be a prokaryotic or eukaryotic host cell. A cell may be a cell that is suitable for culture in liquid or on solid media. Alternatively, a host cell is a cell that is part of a multicellular organism such as a transgenic plant or animal.

For example if a bacterium (preferably E. coli) is used as host cell, the following regulatory regions may be used. A promoter suitable to be used in a bacterium is lac, trp, tac, T7, phoA, ara, xapA, cad, recA, spc, bla, P1 and P2 from rrnB ribosomal RNA operon, PL promoter from phage λ. A terminator suitable to be used in a bacterium is lac, trp, tac, T7 (used in example), phoA, ara, xapA, cad, recA, spc, bla, P1 and P2 from rrnB ribosomal RNA operon, PL terminator from phage λ. A preferred promoter used is a T7 promoter and/or a preferred terminator is the T7 terminator. A preferred signal peptide for excretion is E. coli Sec-recognition peptide (SecA), E. coli Tet-recognition peptide, E. coli dsbA, E. coli phoA, E. coli pelB, E. coli MBP (maltose binding protein). A marker suitable for E coli is ampicillin. Alternatively, the proBA operon from E. coli strain K12, including its original transcription regulatory elements may be used to facilitate selection without antibiotics.

In another example, if a yeast is used as host cell, the following regulatory regions may be used. A promoter suitable to be used in yeast may be a constitutive promoter. Examples of suitable constitutive promoters include: a glycolytic promoter selected from FBA1, TPI1, PGK1, PYK1, TDH3, ENO2, HXK2, PGI1, PFK1, PFK2, GPM1 gene or a non-glycolytic promoter of the TEF2 gene. A suitable promoterto be used in yeast may be inducible. If the yeast is a *Pichia,* the methanol inducible promoter AOX1 is preferred. GAL1 could also be used in *Pichia.* GAL1 promoter (galactose-inducible) may be used when the yeast is *S*. *cerevisiae.* The genes mentioned from which a promoter could be derived for a yeast as host cell could also be used to derive a terminator for the same yeast. A preferred signal peptide for excretion for *Pichia* (and *Saccharomyces*) includes: the *S*. *cerevisiae* alpha mating factor pre- pro- secretion signal peptide, the *S*. *cerevisiae* Ost1 signal peptide, the *S*. *cerevisiae* Aga2 signal peptide and fusions thereof.

In another example, if a filamentous fungus is used as host cell, the following regulatory regions may be used. The following promoters may be used: the *Aspergillus niger* glucoamylase promoter *(glaA),* the *Aspergillus nidulans* alcohol dehydrogenase promoter (*alcA*) or the *Aspergillus oryzae* taka-amylase A promoter (*amyB*), the *Aspergillus niger* alcohol dehydrogenase promoter *(adhA),* the *Trichoderma reesei* pyruvate kinase promoter *(pki)* or the *Aspergillus nidulas* glyceraldehyde-3-phosphate dehydrogenase promoter (*gpdA*). The genes mentioned from which a promoter could be derived for a filamentous fungus as host cell could also be used to derive a terminator for the same filamentous fungus. A preferred signal peptide for excretion for a filamentous fungus, preferably an *Aspergillus* includes: the *Aspergillus niger* glucoamylase signal peptide (*glaA*), the *Aspergillus niger* a-galactosidase signal peptide (*AgIB*) and the *Trichoderma reesei* cellobiohydrolase I (*Cbhl*). A preferred promoter and terminator for *Aspergillus* (more preferably for *Aspergillus niger*) are the glucoamylase promoter and the glucoamylase terminator of *Aspergillus niger.*

Gene constructs described herein can be placed in expression vectors. Thus, in another aspect there is provided an expression vector comprising a gene construct as described in any of the preceding embodiments.

Expression may be assessed by any method known to a person of skill in the art. For example, expression may be assessed by measuring the levels of transgene expression in the transduced tissue on the level of the mRNA or the protein by standard assays known to a person of skill in the art, such as qPCR, RNA sequencing, Northern blot analysis, Western blot analysis, mass spectrometry analysis of protein-derived peptides or ELISA. Expression may be assessed at any time after administration of the gene construct, expression vector or composition as described herein. In some embodiments herein, expression may be assessed after 1 week, 2 weeks, 3 weeks, 4, weeks, 5 weeks, 6 weeks, 7 weeks, 8 weeks, 9, weeks, 10 weeks, 11 weeks, 12 weeks, 14 weeks, 16 weeks, 18 weeks, 20 weeks, 22 weeks, 24 weeks, 28 weeks, 32 weeks, 36 weeks, 40 weeks, or more.

Suitable cell culturing methods for use in the process of producing recombinant protein are known to the skilled person, for example, in van't Riet, K. and Tramper, J., 1st edition, Basic Bioreactor Design, CRC Press, NY, 1991. Such methods include, but are not limited to, submerged fermentation in liquid media, surface fermentation on liquid media and solid-state fermentations. Cell culturing may, for example, be performed by cultivation in micro-titer plates, shake-flasks, small-scale benchtop bioreactors, medium-scale bioreactors and/or large-scale bioreactors in a laboratory and/or an industrial setting. Suitable cell culturing modes include, but are not limited to, continuous, batch and/or fed-batch fermentation as well as their combinations. Cell culturing may be performed using continuous fermentation, batch fermentation, preferably fed batch fermentation.

In the context of the invention, "culture medium", hereinafter alternately referred to as "growth medium", can be interpreted to encompass cases wherein the cultured cells are absent as well as cases wherein the cultured cells are present in the culture medium. "Culture broth" refers to the culture medium wherein the cultured cells are present. "Culture supernatant" refers to the culture medium wherein the cultured cells are absent. "Cell-free extract" refers to a cell lysate not comprising the cellular debris. Cell culturing as part of the process of the invention can be performed under conditions conducive to the production of the introduced myoglobins, which are known to the skilled person. Such conditions depend not only on the chemical composition of the culture medium but also on other process parameters including culture duration, temperature, O₂ levels in the culture broth and/or headspace, CO₂ levels in the culture broth and/or headspace, pH, ionic strength, agitation speed, hydrostatic pressure and the like. Cell culturing can take place using a culture medium comprising suitable nutrients, such as carbon and nitrogen sources and additional compounds such as inorganic salts and vitamins, using procedures known in the art (see, e. g. Bennett, W. and Lasure, L., 1st edition, More Gene Manipulations in Fungi, Academic Press, CA, 1991). Suitable growth media are available from commercial suppliers or may be prepared using published compositions that are suitable for the respective hosts (e.g. in catalogues of the Centraalbureau Voor Schimmelcultures collection (CBS) or of the American Type Culture Collection (ATCC)).

The exact composition of the growth medium and the values of culture process parameters are not critical features of the invention. Any growth medium composition may be contemplated, as long as it allows for growth of the host cell and production of the introduced myoglobins. The growth medium will typically comprise a carbon source to be used for the growth of the cultured cell. The skilled person understands that suitable carbon sources may be added externally to the growth medium or may already be present in said medium. Carbon sources may be present or added individually or in mixtures of multiple carbon sources. Examples of suitable carbon sources known in the art include simple sugars such as glucose, glycerol, maltose, sucrose, xylose, arabinose, complex sugars such as maltodextrins, hydrolysed starch, starch, molasses, and second-generation feedstocks. Second-generation feedstocks can be particularly attractive because of their lower carbon footprint. Second-generation feedstocks will typically comprise lignocellulosic material. Such material includes any lignocellulose and/or hemicellulose-based materials. Such material may be sourced from agricultural, industrial or municipal, preferably agricultural, waste streams. Examples of suitable materials include (agricultural) biomass, commercial organic matter, municipal solid waste, virgin biomass such as waste paper and garden waste, or non-virgin biomass. General forms of biomass include trees, shrubs and pastures, wheat, wheat straw, sugarcane bagasse, switchgrass, Japanese pampas grass, corn, corn stover, corn cob, canola stalk, soybean stalk, sweet corn, corn kernels, products and by-products from cereal milling (including wet milling and dry milling), such as corn, wheat, and barley, often referred to as "bran or fiber", and municipal solids. Biomass can also be grassy materials, agricultural residues, forestry residues, municipal solid waste, waste paper, and pulp and paper mill residues. Agricultural biomass includes branches, shrubs, tows, corn and corn straw, energy crops, forests, fruits, flowers, cereals, pastures, herbaceous crops, leaves, bark, needles, logs, roots, young trees, short term rotating woody crops, shrubs, switch herbs, trees, vegetables, fruits, vines, sugar beet pulp, wheat middlings, oat hulls, and hard and soft timber (not including toxic wood), and organic waste materials resulting from agricultural processes including agriculture and forestry activities, particularly forestry wood waste. Agricultural biomass may be any of the foregoing alone, or any combination or mixture thereof. Carbon sources such as organic acids, aldehydes, ketones, esters and alcohols may also be contemplated. The use of growth media comprising combinations of multiple different carbon sources may also be contemplated in the process of the invention. Such media could, as a nonlimiting example, combine more oxidized carbon sources such as organic acids with more reduced carbon sources such as alcohols. Examples of suitable nitrogen sources known in the art include soy bean meal, corn steep liquor, yeast extract, whey protein, egg protein, casein hydrolysate, urea, ammonia, ammonium salts and nitrate salts. Examples of additional suitable compounds known in the art include phosphate, sulphate, metals such as magnesium, iron, trace elements and vitamins. The exact growth medium requirements will vary based on the host cell, e.g. between yeasts, bacteria and filamentous fungi, said requirements will be known to the skilled person. Accordingly, the growth medium may be a complete (rich) medium or a minimal medium, i.e. a medium comprising only the absolutely necessary components for growth depending on the cultured host cell.

Similar to the composition of the growth medium, process parameters can be assigned any value, as long as they allow for growth of the host cell and production of the introduced myoglobins. Typically, said values will differ based on the host cell that is being cultured and will be known to the skilled person. Preferably, the process according to the invention is an oxygen-limited or aerobic process, meaning that cell culturing is performed under oxygen-limited or aerobic conditions, more preferably the process is oxygen-limited. Oxygen-limited conditions, also known as a micro-aerobic conditions, are culture conditions in which the oxygen consumption is limited by the availability of oxygen. The degree of oxygen limitation is determined by the amount and composition of the ingoing gas flow as well as the actual mixing/mass transfer properties of the fermentation equipment used. Preferably, under oxygen-limited conditions in a liquid culture, the rate of oxygen consumption is at least about 5.5 mmol/L/h, more preferably at least about 6 mmol/L/h and even more preferably at least about 7 mmol/L/h. Aerobic conditions are culture conditions in which the oxygen consumption is not limited by the availability of oxygen.

Cell culturing may be performed at a temperature value that is optimal for the cell, typically at a temperature range of 16-42 °C. In some embodiments, the temperature ranges between 20-40 °C, more preferably between 25-38 °C, most preferably between 28-36 °C. In some most preferred embodiments, a temperature value of about 30 or 36 °C is used.

Cell culturing may be performed at a pH value that is optimal for the cell. In some embodiments, the culture pH value is about pH 2.5, about pH 3.0, about pH 3.5, about pH 4.0, about pH 4.5, about pH 5, about pH 5.5, about pH 6, about pH 6.5, about pH 7, about pH 7.5, about pH 8.0, about pH 8.5, about pH 9. In preferred embodiments, the pH ranges from about pH 3.0 to about pH 9, more preferably from about pH 3.5 to pH 7. In some most preferred embodiments, a pH value of about 6 is used.

Cell culturing may be performed at an ionic strength value of the culture medium that is optimal for the cell, typically at a range between 50 mM - 2 M. In some embodiments, the ionic strength of the culture medium ranges between 75 mM - 1 M, more preferably between 100 mM - 750 mM. In some most preferred embodiments, an ionic strength value of about 100 mM is used.

### Overview of the sequence listing

| Protein | SEQ ID NO protein | SEQ ID NO coding nucleic acid |
|---|---|---|
| Steppe mammoth myoglobin | 1 | 15 |
| Woolly mammoth myoglobin | 2 | 16 |
| Pig myoglobin | 3 | 17 |
| Sheep myoglobin | 4 | 18 |
| Cow myoglobin | 5 | 19 |
| Chicken myoglobin | 6 | 20 |
| Rabbit myoglobin | 7 | 21 |
| Bovine myoglobin | 8 | 22 |
| Mouse myoglobin | 9 | 23 |
| Rat myoglobin | 10 | 24 |
| Tuna myoglobin | 11 | 25 |
| Salmon myoglobin | 12 | 26 |
| Blue bonito myoglobin | 13 | 27 |
| Sword fish myoglobin | 14 | 28 |

### Detailed sequences

- SEQ ID NO:1 Steppe mammoth myoglobin
- SEQ ID NO:2 Woolly mammoth myoglobin
- SEQ ID NO:3 Pig myoglobin
- SEQ ID NO:4 Sheep myoglobin
- SEQ ID NO:5 Cow myoglobin
- SEQ ID NO:6 Chicken myoglobin
- SEQ ID NO:7 Rabbit myoglobin
- SEQ ID NO:8 Bovine myoglobin
- SEQ ID NO:9 Mouse myoglobin
- SEQ ID NO:10 Rat myoglobin
- SEQ ID NO:11 Tuna myoglobin
- SEQ ID NO:12 Salmon myoglobin
- SEQ ID NO:13 Blue bonito myoglobin
- SEQ ID NO: 14 Sword fish myoglobin

### Figure description

Figure 1 - Burger composition
Figure 2 (parts a-d) - Abundance of flavor compounds upon cooking of the burgers.

### Examples

By way of example and not limitation, the following non-limiting examples are illustrative of various embodiments provided by the present disclosure.

### Example 1: Flavor analysis of burgers

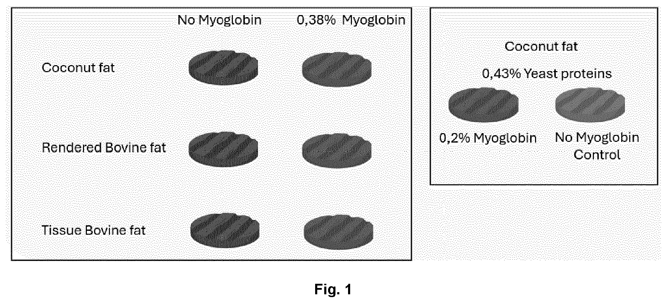

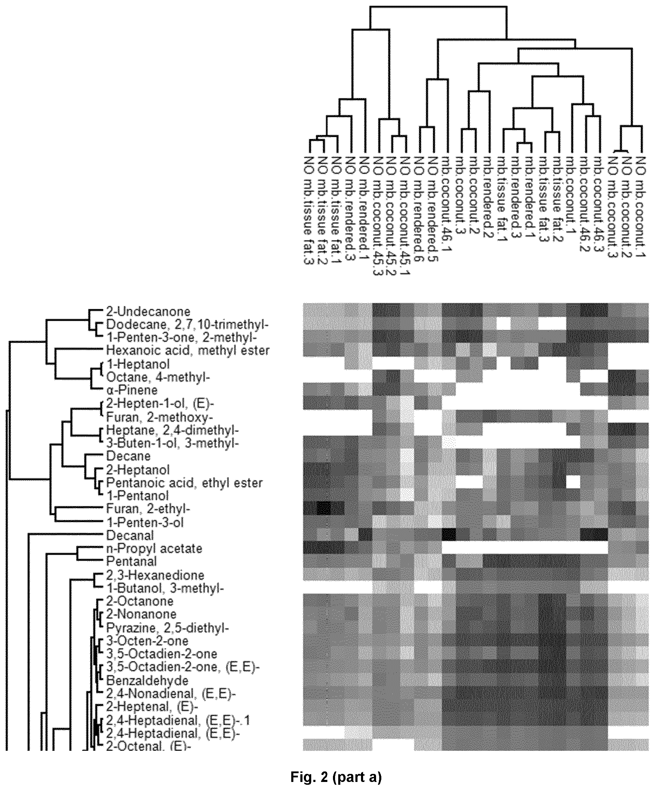

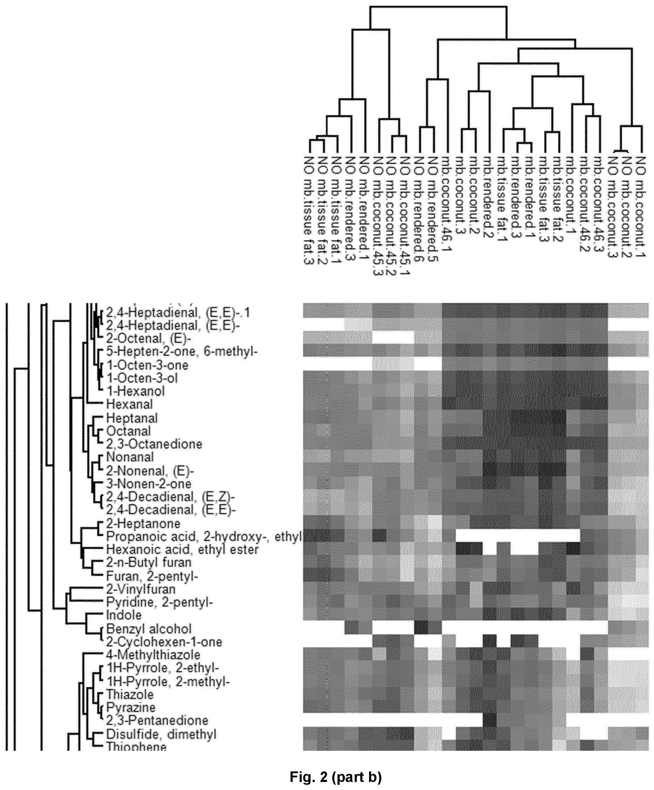

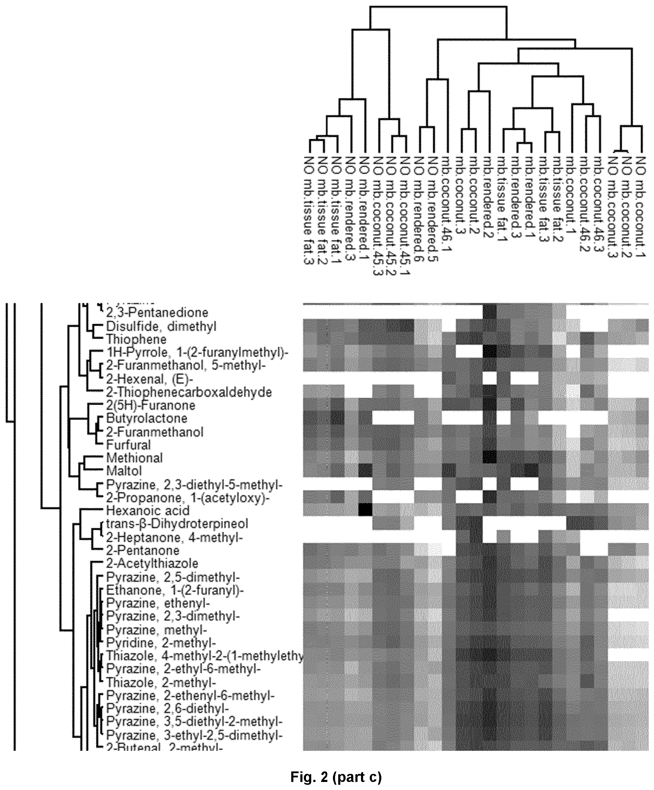

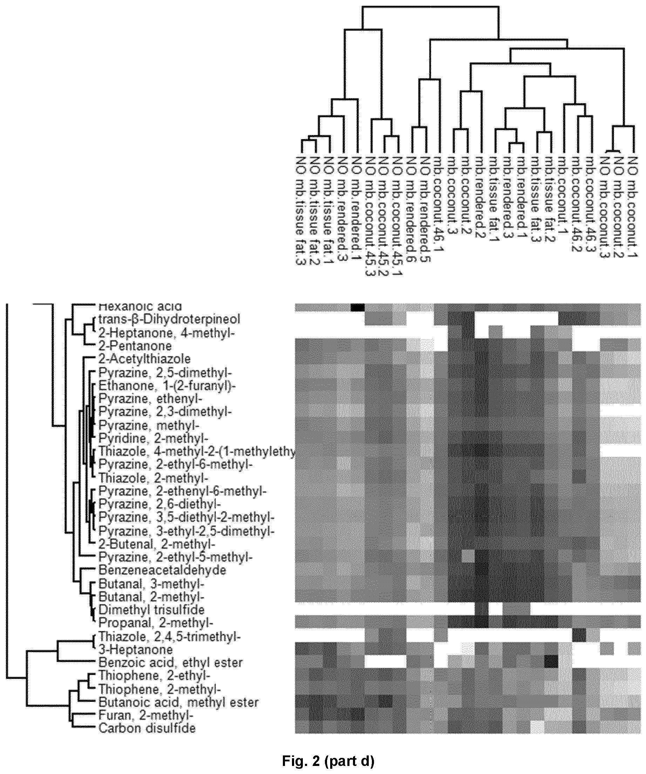

Burgers were generated according to Figure 1 in triplicate using the method of the invention. The myoglobin percentages are weight percentages, wherein all myoglobin was added during step (b) of the method. Cooking time was optimized in frying pans and ovens. Frying pan burgers were chosen and cooked to collect flavor compounds, which were analyzed by GCMS. Perseus (https://maxquant.net/perseusl) was used to process and visualize the data. The abundance of various flavor compounds in the burgers is represented in Figure 2 (parts a-d). Darker coloring represents a higher abundance.

## Claims

1. A method for flavouring a meat substitute, comprising the steps of:
a) providing an initial meat substitute not comprising animal cells,
b) adding a myoglobin composition and a fat composition to the initial meat substitute, wherein the myoglobin composition comprises at least 5.0 wt.% of a myoglobin on a dry matter basis,
c) obtaining a flavoured meat substitute wherein the concentration of myoglobin is at least 0.05 wt.%.

2. A method for flavouring a meat substitute according to claim 1, comprising the step of a1) producing the myoglobin composition via fermentation.

3. A method for flavouring a meat substitute according to claim 1 or 2, wherein the concentration of myoglobin in the flavoured meat substitute is in the range of 0.05-0.5 wt.%, preferably 0.1-0.3 wt.%.

4. A method for flavouring a meat substitute according to any one of the preceding claims, wherein the concentration of myoglobin in the initial meat substitute is less than 0.01 wt.%.

5. A method for flavouring a meat substitute according to any one of the preceding claims, wherein the myoglobin comprised in the myoglobin composition is represented by any one of SEQ ID NOs: 1-14.

6. A method of flavouring a meat substitute according to any one of the preceding claims, wherein the concentration of fat in the fat composition is at least 80 wt.%.

7. A method for flavouring a meat substitute according to any one of the preceding claims, wherein the ratio of the number of saturated fatty acids comprising 16 or more carbon atoms to the total number of fatty acids in the fat composition is at least 30%, preferably in the range of 30%-60%, 40-50%, or 40.3-52.1%.

8. A method for flavouring a meat substitute according to any one of the preceding claims, comprising the step of a2) producing the fat composition via fermentation or cultivation.

9. A method for flavouring a meat substitute according to any one of claims 1 to 7, wherein the fat composition is an animal fat, preferably a rendered or a non-rendered bovine fat.

10. A method for flavouring a meat substitute according to any one of the preceding claims, wherein the initial meat substitute is plant-based.

11. A method for flavouring a meat substitute according to any one of the preceding claims, wherein the myoglobin comprised in the myoglobin composition is produced extracellularly.

12. A method for flavouring a meat substitute according to any one of the preceding claims, wherein a flavour compound is formed when the flavoured meat substitute is heated.

13. A method for flavouring a meat substitute according to claim 12, wherein the flavour compound is an aldehyde or a ketone, wherein the aldehyde or the ketone comprises more than 8 carbon atoms.

14. A method for flavouring a meat substitute according to 12, wherein the flavour compound is an aldehyde comprising more than 8 carbon atoms, a pyrazine, or a thiazole.

15. A meat substitute obtainable by a method of any one of the preceding claims.
